(19) Europäisches Patentamt
European Patent Office
Office européen des brevets

(11) **EP 2 074 473 B1**

(12) **EUROPÄISCHE PATENTSCHRIFT**

(45) Veröffentlichungstag und Bekanntmachung des Hinweises auf die Patenterteilung:
**27.04.2016  Patentblatt 2016/17**

(21) Anmeldenummer: **07802310.8**

(22) Anmeldetag: **14.09.2007**

(51) Int Cl.:
*G02F 1/01* (2006.01)          *G02F 1/035* (2006.01)
*G02F 1/065* (2006.01)

(86) Internationale Anmeldenummer:
**PCT/EP2007/008008**

(87) Internationale Veröffentlichungsnummer:
**WO 2008/034559 (27.03.2008 Gazette 2008/13)**

(54) **ELEKTRO-OPTISCHES HOCHINDEXKONTRAST-WELLENLEITER-BAUELEMENT**

ELECTROOPTICAL HIGH-INDEX CONTRAST WAVEGUIDE COMPONENT

COMPOSANT GUIDE D'ONDE ÉLECTRO-OPTIQUE À CONTRASTE D'INDICE ÉLEVÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.09.2006  DE 102006045102**

(43) Veröffentlichungstag der Anmeldung:
**01.07.2009  Patentblatt 2009/27**

(73) Patentinhaber: **Karlsruher Institut für Technologie**
**76131 Karlsruhe (DE)**

(72) Erfinder:
• **KOOS, Christian**
  **74936 Siegelsbach (DE)**
• **LEUTHOLD, Jürg**
  **75045 Walzbachtal (DE)**
• **FREUDE, Wolfgang**
  **76199 Karlsruhe (DE)**
• **BROSI, Jan-Michael**
  **76135 Karlsruhe (DE)**

(74) Vertreter: **Mergel, Volker**
**Blumbach - Zinngrebe**
**Patentanwälte**
**Alexandrastrasse 5**
**65187 Wiesbaden (DE)**

(56) Entgegenhaltungen:
**US-A1- 2003 053 730     US-A1- 2004 234 189**
**US-A1- 2005 054 199     US-A1- 2005 179 986**
**US-A1- 2006 056 768**

• **SCHOER G ET AL: "TiO2 waveguide with ZnO-ZnO:Al cladding for active optical subsystems" PROCEEDINGS OF THE SPIE - THE INTERNATIONAL SOCIETY FOR OPTICAL ENGINEERING SPIE-INT. SOC. OPT. ENG USA, Bd. 4998, 2003, Seiten 105-113, XP002464137 ISSN: 0277-786X**
• **RYLEY J F ET AL: "ORGANIC-ON-INORGANIC GUIDED WAVE MODULATOR" MICROWAVE AND OPTICAL TECHNOLOGY LETTERS, JOHN WILEY, NEW YORK, NY, US, Bd. 3, Nr. 3, März 1990 (1990-03), Seiten 83-85, XP008028352 ISSN: 0895-2477**

**Beschreibung**

Gebiet der Erfindung:

Die Erfindung betrifft ein elektro-optisches Hochindexkontrast-Wellenleiter-Bauelement insbesondere für die integrierte Optik und die optischen Nachrichtentechnik.

Hintergrund der Erfindung

Die Nutzung von Licht zur Übertragung von Informationen bietet eine Reihe von Vorteilen gegenüber rein elektrischen Verfahren, vor allem, wenn hohe Datenraten benötigt werden oder große Distanzen zu überwinden sind. Dagegen erfolgt die digitale Verarbeitung und Speicherung von Information heute fast ausschließlich elektronisch in integrierten Bauteilen, die meist auf Basis von Silizium, z.B. in Complementary Metal Oxide Semicbnductor Technology (CMOS), hergestellt werden. Zur Umsetzung der Informationen zwischen elektronischen Speicher- und Prozessorbausteinen und optischen Übertragungsstrecken sind daher elektro-optische Bauteile von großem Interesse, die sich zusammen mit elektronischen Schaltungen integrieren lassen.

Schnelle elektro-optische Modulatoren werden heute meist auf Substraten integriert, die einen starken linearen elektro-optischen Effekt (Pockelseffekt) aufweisen, bei denen sich durch Anlegen einer Spannung der Brechungsindex für mindestens eine Polarisation verändern lässt. Beispiele für solche Materialien sind Lithiumniobat (LiNbIO$_3$), Ammonium-Dihydrogen-Phosphat (ADP), Kalium-Dihydrogen-Phosphat (KDP), Beta-Barium-Borat (BBO) oder Galliumarsenid (GaAs). Die Änderung des Brechungsindex in diesen Materialien beruht im wesentlichen auf der nichtlinearen Polarisation gebundener Elektronen durch das angelegte elektrische Feld und erfolgt praktisch instantan. Wellenleiterbasierte Bauteile sind typischerweise in Form eindiffundierter Streifen mit kleinem Indexkontrast (z.B. 0,2% für die Eindiffusion von Ti in LiNbO$_3$) realisiert. Die elektrische Spannung wird typischerweise über Zuleitungen zugeführt, die auf der Oberfläche des Substrates direkt über dem Wellenleiter oder etwas seitlich versetzt parallel zu diesem verlaufen. Um optische Verluste zu vermeiden, müssen diese Leitungen einen gewissen Mindestabstand zum optischen Wellenleiter aufweisen, oder aber der an den Wellenleiter angrenzende Teil muss aus einem transparenten Material bestehen. Eine solche Anordnung ist aus der Offenlegungsschrift US 2003/0053730 bekannt.

Diese Modulatoren haben eine Vielzahl von Nachteilen: Zum einen können sie nur sehr schwer mit elektronischen Bauteilen auf einem gemeinsamen Substrat integriert werden, da viele zur Realisierung von elektronischen Bauteilen gebräuchliche Substrate, insbesondere Silizium, keinen oder nur einen sehr schwachen - und damit technisch nicht nutzbaren - linearen elektro-optischen Effekt aufweisen.

Ferner können Wellenleiterkurven oft nur mit großen Krümmungsradien realisiert werden, da der Indexkontrast der eindiffundierten Wellenleiter sehr gering ist. Aus demselben Grund müssen auch Verzweigungen dieser Wellenleiter sehr lang ausgelegt werden. Eine Miniaturisierung dieser Bauteile ist also zumindest schwierig. Außerdem ist der Modenfelddurchmesser aufgrund des kleinen Indexkontrastes sehr groß, und entsprechend groß ist auch das Volumen, das vom angelegten elektrischen Feld ausgefüllt werden muss. Daher sind zum Betrieb eines solchen Modulators vergleichsweise hohe Spannungen nötig. Gleichzeitig sind die Elektroden üblicherweise beide auf der Substratoberfläche aufgebracht. Daher läuft also nur ein kleiner Teil der elektrischen Feldlinien durch den lichtführenden Bereich des optischen Wellenleiters, und nur dieser Teil trägt zur elekro-optischen Wechselwirkung bei. Der Rest des elektrischen Feldes vergrößert unnötigerweise die zwischen den Elektroden wirksame Streukapazität und damit den zum Betrieb des Modulators nötigen Strom. Insgesamt benötigen diese Bauteile also große Eingangsleistungen, die meist nur durch spezielle und teure Treiberelektroniken bereitgestellt werden können.

Neben den auf dem linearen elektro-optischen Effekt beruhenden Bauteilen sind derzeit halbleiterbasierte elektrooptische Modulatoren Gegenstand intensiver Forschungen. Dabei werden Bauteile untersucht, die auf der Änderung des komplexen Brechungsindex eines Halbleitermaterials durch die Injektion oder räumliche Konzentration freier Ladungsträger beruhen (vgl. US 2005/0175270, US 2004/0208454, US 2005/0089257 oder Liu et al., "A high-speed silicon optical modulator based on a metal-oxide-semiconductor capacitor", Nature 427, S. 615 ff, 2004).

Die elektrische Bandbreite dieser Modulatoren ist jedoch bislang vergleichsweise gering, da entweder die Lebensdauer der entsprechenden Ladungsträger begrenzend wirkt, oder aber die Geschwindigkeit eine Rolle spielt, mit der die erforderlichen Ladungsmengen umgewälzt werden können.

Es ist also wünschenswert, Bauteile, die auf schnellen elektro-optischen Effekten, beispielsweise dem linearen oder dem quadratischen elektro-optischen Effekt beruhen, direkt auf Substraten integrieren zu können, die auch für die Realisierung von elektronischen Komponenten geeignet sind. Dazu müssen optische Wellenleiter mit zusätzlichen, vom Substratmaterial unabhängigen Eigenschaften versehen werden. Dies lässt sich erreichen, indem eine starke Wechselwirkung des geführten Lichtes mit geeignetem, beispielsweise elektrooptischen Umgebungsmaterial herbeigeführt wird. Besonders bei der Kombination eines hochbrechenden Wellenleiterkerns mit einem niedrigbrechenden Umgebungsmaterial lässt sich diese Wechselwirkung durch die unstetige Überhöhung der Normalkomponente des elektrischen Feldes an der dielektrischen Grenzfläche erhöhen. Die von Almeida et al. in "Guiding and Confining light in void nanostructure", Opt. Lett. 29 (11), S. 1211ff, 2004 wissenschaftlich vorgeschlagene und in weiteren Veröffentlichungen diskutierte Struktur nutzt dieses Prinzip für einen speziellen Wellenleiter, der aus zwei parallelen hochbrechenden Streifen und einem dazwischen eingeschlossenen Umgebungsmaterial besteht.

Baehr-Jones et al., "Optical modulation and detection in slotted Silicon waveguides", Opt. Express 13 (14), S. 5216 ff, 2005 beschreibt eine Realisierung einer Struktur, bei der die Wellenleiterstreifen aus dotiertem Silizium bestehen und in einem linear elektro-optischen Polymer eingebettet sind. Durch Anlegen einer Spannung an die Wellenleiterstreifen wird der Brechungsindex im Zwischenraum verändert, und das Bauteil kann als elektro-optischer Phasenschieber verwendet werden. Allerdings hat dieses Bauteil nur eine sehr kleine, in der Praxis unbrauchbare elektrische Bandbreite (ca. 6 MHz), da die elektrischen Zuführungen nur aus einigen wenigen dünnen Siliziumstegen bestehen und somit sehr hochohmig sind. Ferner ist die Herstellung des schmalen, zwischen den Wellenleiterstreifen befindlichen Spaltes und dessen Befüllung mit einem elektrooptischen Polymer technologisch aufwendig.

Block et al. beschreiben in dem US-Patent 6,993,212 B2 einen optischen Wellenleiter mit einem Silizium-Wellenleiterkern und einem elektro-optischen Wellenleiter-Cladding. Angaben zu den Dimensionen der Struktur werden nicht gemacht. Ferner wird als Material für die Elektroden Metall genannt.

US 2005/0179986 A1 beschreibt eine SOI-basierte Vorrichtung mit einer PBG-Struktur (photonic band gap). Die genaue Ausgestaltung der elektrischen Kontakte ist nicht beschreiben.

US2005/0054199 A1 beschreibt einen optischen Wellenleiter mit einem justierbaren Cladding. Die Elektroden sind ebenfalls aus Metall.

Bei metallischen Elektroden muss typischerweise ein relativ großer Mindestabstand zwischen den Elektroden und dem lichtführenden Wellenleiterkern eingehalten werden, um optische Verluste zu vermeiden. Bei gleicher Bauteillänge bedingt dies wiederum in nachteiliger Weise eine relativ hohe Betriebspannung. Die Verwendung des Wellenleiterkerns selbst als Elektrode ist ebenfalls nicht erwähnt und mit den beschriebenen Metallelektroden auch nicht ohne weiteres möglich. Ferner wird eine zur Erzielung einer hohen Bandbreite vorteilhafte Anpassung der Gruppengeschwindigkeiten zwischen elektrischem und optischem Signal nicht erwähnt.

Ridgway et al. beschreiben in der US 2003/0174982 A1 Elektroden- und Kernanordnungen für polarisationsunabhängige Wellenleiter. Generell werden auch hier Metallelektroden eingesetzt. An einer Stelle der Beschreibung werden zwar auch transparente Elektroden erwähnt, jedoch ohne nähere Angaben zur deren Ausgestaltung. Darüber hinaus ist davon auszugehen, dass das hierfür vorgeschlagene Material, nämlich ITO einen Brechungsindex besitzt, der sogar etwas höher als der des verwendeten Quarzglaskerns ist, so dass auch hier eine effiziente Lichtführung relativ große Abstände zwischen Kern und Elektrode und damit bei gleicher Bauteillänge eine relativ hohe Betriebspannung erfordert. Jedenfalls handelt es sich hierbei nicht um ein Hochindexkontrast-Wellenleiter-Bauelement. Die Verwendung des Wellenleiterkerns selbst als Elektrode ist ebenfalls nicht erwähnt.

Ryley et al. beschreiben in "Organic-on-Inorganic Guided Wave Modulator" in Microwave and optical technology letters, Vol. 3, 1990 einen Mach-Zehnder-Schalter mit einem vierschichtigen Wellenleiter.

In US 2006/0056768 A1 wird ein optischer Abschwächer mit einem Wellenleiterkern, einem Cladding und einem elektrooptischen Polymer beschrieben. Hier soll das Polymer einen relativ hohen Brechungsindex aufweisen.

Gerrit Schoer et al. beschreiben in "TiO2-Waveguide with ZnO-ZnO :Al cladding for active optical subsystems" in Proceedings of SPIE, Vol. 4998, 2003 einen Wellenleiter aus $TiO_2$ mit ZnO:Al-Elektroden und ZnO-Deckschichten. Hierbei scheint allerdings der Ti02-Wellenleiter flächig ausgebildet zu sein und die laterale Führung des Lichts durch einen ZnO-Streifen bewirkt zu werden.

Allgemeine Beschreibung der Erfindung

Die Erfindung hat sich daher die Aufgabe gestellt, ein elektro-optisches Bauelement bereitzustellen, welches eine hohe elektrische Bandbreite aufweist und welches mit geringer Spannung bzw. geringem Strom betrieben werden kann.

Eine weitere Aufgabe der Erfindung ist es, ein einfach herzustellendes und damit kostengünstiges und für die Massenproduktion geeignetes elektro-optisches Bauelement bereit zu stellen.

Noch eine Aufgabe der Erfindung ist es, ein kompaktes elektro-optisches Bauelement bereit zu stellen, das zusammen mit elektronischen Bauteilen auf einem gemeinsamen Substrat integriert werden kann.

Die Aufgabe der Erfindung wird jeweils durch den Gegenstand der unabhängigen Ansprüche gelöst. Vorteilhafte Weiterbildungen sind Gegenstand der abhängigen Ansprüche.

Kernstück des erfindungsgemäßen Bauelements ist ein Wellenleiter, dessen Transmissionseigenschaften sich dadurch verändern lassen, dass eine Spannung an ein dem Wellenleiterkern benachbartes, zumindest bereichsweise elektro-optisches Umgebungsmaterial angelegt und/oder ein Stromfluss in dieses Umgebungsmaterial eingeprägt wird.

Als "elektro-optisch" im Sinne dieser Anmeldung/dieses Patents werden Materialien bezeichnet und verstanden, bei denen sich die optischen Eigenschaften, insbesondere der Real- und/oder der Imaginärteil des komplexen Brechungsindex bei Anlegen einer Spannung U und/oder den damit verbundenen Stromfluss I für mindestens eine Polarisation ändert. Zu diesen Materialien zählen beispielsweise Werkstoffe, die einen linearen elektro-optischen Effekt (Pockels-Effekt) oder einen quadratischen elektro-optischen Effekt (elektro-optischer Kerr-Effekt) aufweisen. Elektro-optische Effekte im Sinne dieser Beschreibung höherer Ordnung existieren theoretisch ebenfalls, jedoch sind bislang keine Materialien bekannt, bei denen diese hinreichend stark sind, um technisch nutzbar zu sein. Diese sollen aber nicht ausgeschlossen sein.

Die Kompaktheit des Bauelements wird insbesondere dadurch gewährleistet, dass ein hochbrechender Wellenleiterkern zur Führung des Lichtes verwendet wird. Der Brechungsindex des Wellenleiterkerns ist vorzugsweise größer als 1,8. Dadurch wird eine hohe Integrationsdichte möglich. Dieser Kern wird ferner derart mit einem niedrigbrechenden zumindest bereichsweise elektro-optischen Umgebungsmaterial umgeben, dass ein möglichst großer Teil des optischen Feldes mit diesem Material in Wechselwirkung tritt. Der Brechungsindex des Umgebungsmaterials beträgt vorzugsweise 1 bis 3, wobei der Indexunterschied zwischen dem Wellenleiterkern und dem Umgebungsmaterial mindestens 0,4, bevorzugt größer oder gleich 0,5, besonders bevorzugt größer oder gleich 1 beträgt. Durch den hohen Kontrast der Brechungsindizes kann der Modenfelddurchmesser klein gehalten werden. Der Modenfelddurchmesser ist vorzugsweise kleiner oder gleich 3 $\mu$m. Es handelt sich bei dem Bauelement also um ein sogenanntes Hochindexkontrast-Wellenleiter-Bauelement.

Dabei wird die unstetige Feldüberhöhung der Normalkomponente des elektrischen Feldes an den Grenzflächen des Kerns gezielt ausgenutzt. Zum Schalten wird der Real- oder Imaginärteil des Brechungsindex des niedrigbrechenden Materials durch ein von außen angelegtes elektrisches Feld verändert. Da das Wellenleiterkernmaterial selbst keine elektro-optischen Eigenschaften aufzuweisen braucht (dies aber nicht ausgeschlossen ist), kann der Kern in einem leicht strukturierbaren Materialsystem hergestellt werden, das die gleichzeitige Integration von elektronischen Bauteilen ermöglicht. Hierbei sind insbesondere Silizium-auf-Isolator-Substrate (sogenannte Silicon-on-insulator-Substrate, SOI) von Interesse. Der Wellenleiterkern kann z.B. aus einem dotierten oder undotierten Halbleitermaterial, z.B. Silizium, bestehen und weist vorzugsweise einen Querschnitt von kleiner oder gleich 5 ($\mu$m)$^2$, in vielen Fällen sogar kleiner als 1 ($\mu$m)$^2$ auf.

Gemäß einem allgemeinen Aspekt der Offenbarung wird demnach ein elektro-optisches Hochindexkontrast-Wellenleiter-Bauelement, basierend auf dem E-Feld-induzierten elektrooptischen Effekt bereit gestellt, umfassend:

- einen ein- oder mehrteiligen hochbrechenden Wellenleiterkern in Form von einem oder mehreren parallelen Wellenleiterkernstreifen zur Lichtführung,
- niedrigbrechendes, insbesondere substratunabhängiges oder substratfremdes, optisch transparentes Umgebungsmaterial, welches den Wellenleiterkern bzw. dessen Bestandteile insbesondere oberhalb und unterhalb umgibt oder in welches der Wellenleiterkern im Wesentlichen (z.B. von ggfs. vorhandenen, insbesondere transparenten elektrisch leitfähigen Zuleitungen abgesehen) vollständig eingebettet ist und welches mit dem geführten Licht in Wechselwirkung steht, wobei das Umgebungsmaterial zumindest bereichsweise elektro-optische Eigenschaften aufweist und wobei somit die Transmissionseigenschaften des Wellenleiters in Ansprechen auf das elektrische Feld verändert werden können,
- einen ersten und zweiten zumindest teilweise optisch transparenten elektrischen Leitungsbereich, welche sich in der Nähe des Wellenleiterkerns längs entlang der Ausbreitungsrichtung des Lichts erstrecken, d.h. entlang dem Wellenleiterkern und unmittelbar angrenzend an diesem oder in geringem Abstand zu diesem verlaufen, wobei der Abstand vorzugsweise ≤ 20 $\mu$m, besonders bevorzugt ≤ 2,5 $\mu$m, ≤ 1 $\mu$m oder ≤ 500 nm beträgt, und
- vorzugsweise eine erste und zweite sich längs entlang der Ausbreitungsrichtung des Lichts erstreckende Leiterbahn von gleicher oder höherer elektrischer Leitfähigkeit als die optisch transparenten Leitungsbereiche, vorzugsweise in Form jeweils einer oder mehrerer streifenförmigen Metallschichten. Die nicht transparenten elektrischen Leiterbahnen verlaufen also parallel und im Abstand zum Wellenleiterkern und kontaktieren bevorzugt unmittelbar elektrisch die optisch transparenten elektrischen Leitungsbereiche auf einer Mindestlänge parallel zur Ausbreitungsrichtung des Lichts (z-Richtung).

Ferner bilden die optisch transparenten elektrischen Leitungsbereiche und/oder der Wellenleiterkern und/oder die Bestandteile des Wellenleiterkerns zwei oder mehr optisch transparente und sich entlang der Ausbreitungsrichtung des Lichts erstreckende Elektroden, dergestalt, dass durch Anlegen einer elektrischen Spannung an die Elektroden auf einer gewissen Länge entlang der Ausbreitungsrichtung des Lichts ein elektrisches Feld in dem elektro-optischen Umgebungsmaterial zwischen den Elektroden erzeugt wird und hierdurch auf einer Wechselwirkungslänge eine Änderung der optischen Eigenschaften des elektro-optischen Umgebungsmaterials bewirkt wird, wobei das elektrische Feld in dem elektro-optischen Umgebungsmaterial einen starken Überlapp mit dem optischen Modenfeld des geführten Lichts aufweist, wobei die optisch transparenten elektrischen Leitungsbereiche entlang der Ausbreitungsrichtung des Lichts auf der Wechselwirkungslänge mit den Leiterbahnen elektrisch verbunden sind, um die Elektroden über eine große Länge mit Spannung zu beaufschlagen. Die Länge des mit einer Spannung beaufschlagten Bereiches, also desjenigen Bereiches entlang der Ausbreitungsrichtung des Lichts, über den die elektrooptische Wechselwirkung erfolgt (Wechselwirkungsbereich), wird abhängig von der Qualität des elektro-optischen Umgebungsmaterials und von der Gruppengeschwindigkeit des geführten Lichts gewählt. Der Wechselwirkungsbereich ist also länglich ausgedehnt und erstreckt sich längs entlang der Ausbreitungsrichtung des Lichts. Die elektrischen Leiterbahnen stehen auf der Wechselwirkungslänge in elektrischem Kontakt mit den transparenten optischen Leitungsbereichen. Für ein einfaches Ausführungsbeispiel der Erfindung beträgt die Wechselwirkungslänge ca. 50mm, sie kann jedoch durch ein geeignetes Wellenleiterdesign für eine technologisch aufwendigere Struktur bis auf ca. 150 $\mu$m verringert werden, wobei jeweils ein elektro-optischer Koeffizient von $r_{33}$=50pm/V zugrunde gelegt wird. Mit den derzeit bekannten elektrooptischen Materialien ist also davon auszugehen, dass die Wechselwirkung zwischen dem elektrischen Feld und dem optischen Modenfeld zumindest über 30$\mu$m, mindestens jedoch über 10$\mu$m erfolgen muss. Um diese Wechselwirkungslänge zu erzielen, erstrecken sich die optisch transparenten Leitungsbereiche ebenfalls auf einer Länge von zumindest 10 $\mu$m, besonders bevorzugt zumindest 30 $\mu$m (Mindstlänge) entlang der Ausbreitungsrichtung des Lichts. Mit anderen Worten werden die Elektroden auf der gesamten Mindestlänge (kontinuierlich oder wiederkehrend) kontaktiert und mit Spannung beaufschlagt. Vorzugsweise sind die optisch transparenten elektrischen Leitungsbereiche als flächige Schichten aufgebracht und erstrecken sich also längs entlang der Ausbreitungsrichtung auf der erforderlichen Wechselwirkungslänge und sind auf dieser Länge mit den Leiterbahnen niederohmig verbunden. Der Begriff niederohmig ist hier auf den Querleitwertsbelag $G'_p$ bezogen und mit dem Kapazitätsbelag $C'_p$ der Leitung in Beziehung zu setzen. Dies lässt sich z.B. durch die RC-Zeitkonstante $\tau_{3dB}$ =$C'_p$/$G'_p$ quantifizieren. $\tau_{3dB}$ ist vorzugsweise kleiner oder gleich 500 ps, besonders bevorzugt kleiner oder gleich 318 ps und am meisten bevorzugt kleiner oder gleich 100 ps. Die optisch transparenten elektrischen Leitungsbereiche können kontinuierlich oder strukturiert sein, um beispielsweise die Abstrahlung von Licht in oder durch diese Bereiche zu verhindern.

Als elektro-optisches Material kann auch ein solches verwendet werden, bei welchem die Änderung der optischen Eigenschaften ganz oder teilweise durch einen Stromfluss bewirkt wird, der mit der angelegten Spannung einhergeht. Die vorstehenden Ausführungen sind dann sinngemäß zu übertragen.

Das elektro-optische Material ist z.B. eine Kohlenstoffverbindung mit elektro-optischen Eigenschaften, ein elektro-optisches Polymer oder eine Siliziumverbindung, beispielsweise $SiO_x$, $SiN_x$, $SiC_x$, die ggf. mit anderen Stoffen (insbesondere aus der Gruppe der seltenen Erden, z.B. Er, Yb) dotiert ist.

Das elektrooptische Material kann demnach beispielsweise in Form einer Lösung durch Aufschleudern (Spincoating) aufgebracht werden, oder aber aus der Gas- oder Flüssigphase abgeschieden werden (z.B. durch Aufdampfen, PVD, CVD, MOCVD o.ä.), ist also beispielsweise ein aus der Gas- oder Flüssigphase aufbringbares Material.

Die optisch transparenten elektrischen Leitungsbereiche bestehen vorzugsweise aus dotiertem Halbleitermaterial (z.B. enthaltend Silizium mit einer Dotierungsdichte von $5x10^{15}$ bis $5x10^{18}$ Fremdatome pro Kubikzentimeter) oder aus einem dotiertem oder undotiertem Metalloxid (z.B. Indium-Zinn-Oxid (ITO), ZnO oder $In_2O_3$) oder aus einem leitfähigen Polymer. Durch die niederohmige entlang der Ausbreitungsrichtung ausgedehnte elektrische Zuführung kann die Änderung des zwischen des beiden Elektroden herrschenden elektrischen Feldes dennoch sehr schnell erfolgen, so dass z.B. eine 3dB-Grenzfrequenz der elektro-optischen Modulation $f_{3dB} = G'_p/(2\pi C'_p)$ größer oder gleich 500 MHz, bevorzugt größer oder gleich 2 GHz erzielt wird. Unter der 3dB-Grenzfrequenz wird diejenige Frequenz verstanden, bei der die Amplitude der Phasenverschiebung um einen Faktor $1/\sqrt{2}$ gegenüber ihres Wertes bei Frequenz null abgefallen ist.

Vorzugsweise liegt der Wellenwiderstand entlang des Wellenleiters verlaufenden elektrischen Leitung zwischen 9 $\Omega$ und 81 $\Omega$.

Unter bestimmten Voraussetzungen ist es ferner vorteilhaft, das Bauelement derart auszubilden, dass mindestens 40% der geführten optischen Leistung in dem niedrigbrechenden Material propagiert.

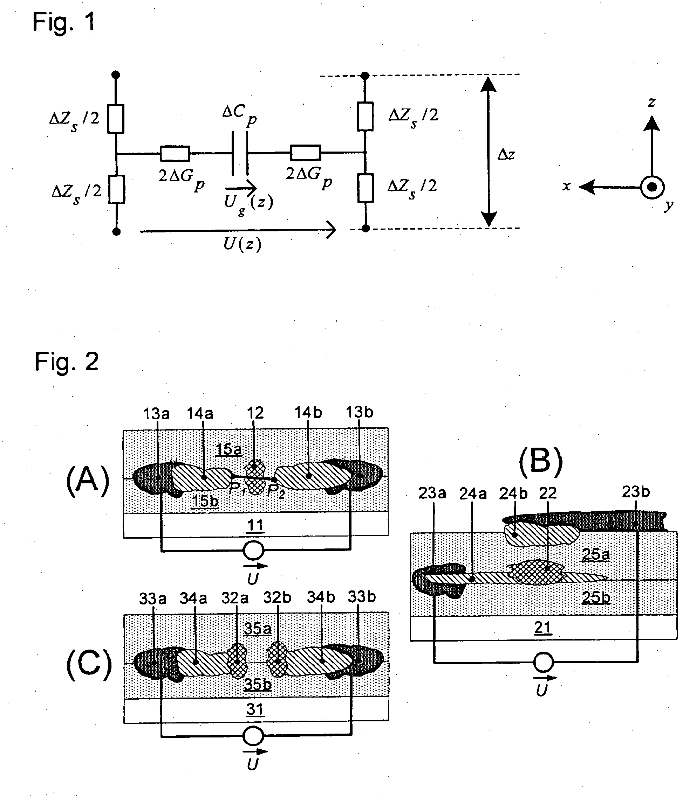

Der Gegenstand der Offenbarung lässt sich zumindest in den folgenden drei Ausführungsformen (A), (B) und (C) (vgl. Fig. 2(A) bis 2(C)) realisieren, wobei in dem vorliegenden Patent die Ausführungsform (A) ein Beispiel ist, das das Verständnis der Erfindung erleichtert:

(A) Der erste und zweite optisch transparente elektrische Leitungsbereich bildet die erste bzw. zweite transparente Elektrode. In diesem Fall ist der Wellenleiterkern zwischen der ersten und zweiten Elektrode angeordnet und das durch die externe Spannung induzierte elektrische Feld durchdringt das Umgebungsmaterial im Bereich um den Wellenleiterkern und den Wellenleiterkern selbst. Hierbei durchdringt vorzugsweise die kürzeste in einer Querschnittsebene des Wellenleiters liegende Verbindungstrecke zwischen den Elektroden den Wellenleiterkern und somit werden im Bereich des Wellenleiterkerns und seiner unmittelbaren Umgebung hohe elektrische Feldstärken erreicht. Dieses Beispiel kann insbesondere mit einem einteiligen Wellenleiterkern realisiert sein, falls gewünscht kann der Wellenleiterkern aber auch hier mehrteilig sein.

(B) Der erste optisch transparente elektrische Leitungsbereich bildet eine Zuleitung die den Wellenleiterkern elektrisch kontaktiert, und der Wellenleiterkern bildet selbst die erste Elektrode. Die zweite Elektrode wird wie bei Ausführungsform (A) durch den zweiten optisch transparenten elektrischen Leitungsbereich gebildet. Hierbei durchdringt das durch die externe Spannung induzierte elektrische Feld das Umgebungsmaterial zwischen dem Wellenleiterkern und dem zweiten Leitungsbereich. Bei dieser Ausführungsform (B) ist der Wellenleiterkern elektrisch leitfähig und kann wie bei dem Beispiel (A) einteilig oder mehrteilig sein.

(C) Der Wellenleiterkern ist mehrteilig ausgebildet, dergestalt, dass der Wellenleiterkern zumindest aus einem ersten und zweiten Wellenleiterkern-Streifen besteht. Der erste und zweite optisch transparente elektrische Leitungsbereich kontaktiert den ersten bzw. zweiten Wellenleiterkern-Streifen elektrisch, so dass der erste und zweite Wellenleiterkern-Streifen die erste bzw. zweite Elektrode bildet und die optisch transparenten elektrischen Leitungsbereiche funktionell Zuleitungen zu der jeweiligen Elektrode bilden. Hierbei durchdringt also das durch die externe Spannung induzierte elektrische Feld das Umgebungsmaterial zwischen dem ersten und zweiten jeweils elektrisch leitfähigen Wellenleiterkern-Streifen.

Vorzugsweise ist die Anordnung aus dem Wellenleiterkern, dem Umgebungsmaterial, den optisch transparenten elektrischen Leitungsbereichen und den Leiterbahnen auf einem Substrat aus nicht-elektro-optischem Material, insbesondere einem Halbleiter-Substrat, z.B. einem dotierten oder undotierten Siliziumsubstrat aufgebracht. In diesem Fall ist ein Teil des Umgebungsmaterials zwischen dem Wellenleiterkern und dem Substrat angeordnet. In besonders vorteilhafter Weise können demnach auf demselben Substrat zusätzlich elektrische oder elektronische Komponenten integriert werden.

Bei den Ausführungsformen (B) und (C) kann ein Abstrahlen von optischer Leistung in die optisch transparenten Leitungsbereiche, welche hier eine bzw. zwei Zuleitungen bilden durch die Wahl eines hinreichend niedrigbrechenden Materials oder durch eine geeignete Formgebung verhindert werden. Z.B. sind die Leitungsbereiche als Leitungsschichten ausgebildet, welche eine geringere Höhe und/oder einen verminderten Brechungsindex als der Wellenleiterkern aufweisen. Ferner kann die niederohmige Verbindung zwischen den Wellenleiterkern-Streifen und den zugehörigen Leiterbahnen durch optisch transparente elektrisch leitfähige Zuleitungsschichten mit in Ausbreitungsrichtung fortlaufend wiederholten Querstegen gebildet werden oder die niederohmige Verbindung kann durch Strukturen mit photonischer Bandlücke gebildet werden. Besonders bevorzugt werden die Strukturen derart ausgebildet, dass die Gruppengeschwindigkeiten des elektrischen Signals und des optischen Signals gleich sind oder nur geringfügig voneinander abweichen. Die "geringfügige Abweichung" kann dadurch quantifiziert werden, dass eine Obergrenze für die relative Gruppenlaufzeitdifferenz $\Delta\tau_{gd}$ des elektrischen Signals und des optischen Signals definiert wird. Als quantitatives Kriterium kann hierbei das Produkt aus $\Delta\tau_{gd}$ multipliziert mit der Modulationsfrequenz f dienen. Hierfür gilt vorzugsweise: f*$\Delta\tau_{gd} \leq 0.56$, besonders bevorzugt f*$\Delta\tau_{gd} \leq 0{,}30$. Ferner wird vorzugsweise durch Anlegen der Spannung entweder vornehmlich die Amplitude oder vornehmlich die Phase bzw. die Frequenz des transmittierten Lichtes oder beides geändert. Ferner vorzugsweise beträgt die Phasenverschiebung $\Delta\Phi$ bezogen die auf die Wellenleiterlänge (L) und die von außen angelegte Spannung (U) mindestens $\Delta\Phi/(L \times U) = 1000(Vm)^{-1}$.

Auch kann der Wellenleiterkern und/oder mindestens einer der ihn umgebenden Bereiche entlang der Ausbreitungsrichtung des Lichtes Strukturierungen aufweisen, die die Dispersionsrelation des optischen Modus beeinflussen. Dazu zählen insbesondere in Ausbreitungsrichtung regelmäßige Strukturierungen, die die Gruppengeschwindigkeit des geführten Lichtes herabsetzen oder zur Dispersionskompensation genutzt werden können.

Bei Anordnungen mit geringer Gruppengeschwindigkeit kann eine bestimmte elektro-optische Wechselwirkung schon auf einer kürzeren Strecke erreicht werden, da das Licht länger im Wechselwirkungsbereich verweilt. Beispielsweise lässt sich mit einer Wellenleiterstruktur von ca. 400µm Länge, in der die Gruppengeschwindigkeit 5% der Vakuumlichtgeschwindigkeit beträgt, unter sonst gleichen Bedingungen dieselbe elektrooptische Phasenverschiebung erreichen, wie für eine ca. 3mm lange Struktur, bei der die Gruppengeschwindigkeit 35% der Vakuumlichtgeschwindigkeit beträgt und bei der keine besonderen Maßnahmen zur Verringerung der Gruppengeschwindigkeit ergriffen wurden. In beiden Fällen beträgt die Zeit, die das Licht im Wechselwirkungsbereich verbringt, ca. 27ps. Mit besseren elektrooptischen Materialien und höheren Betriebsspannungen lässt sich diese Zeit noch erheblich verringern. Es ist aber davon auszugehen, dass die Wechselwirkung zwischen dem elektrischen Feld und dem optischen Modenfeld zumindest über 0,3ps, mindestens jedoch über 0,1ps erfolgen muss. Mit anderen Worten wird die Länge der transparenten elektrischen Leitungsbereiche bzw. deren Kontaktierungslänge mit dem Wellenleiter oder den Wellenleiterstreifen entlang der Ausbreitungsrichtung des Lichts mindestens so groß gewählt, dass die Wechselwirkungszeitdauer zwischen dem elektrischen Feld und dem optischen Modenfeld innerhalb der Länge der transparenten elektrischen Leitungsbereiche mindestens 0,1 ps, besonders bevorzugt mindestens 0,3 ps beträgt. Das optische Modenfeld propagiert also entlang des Wellenleiters zumindest für 0,1ps bzw. 0,3ps zwischen den transparenten optischen Leitungsbereichen, d.h. innerhalb der Länge, die niederohmig mit Spannung beaufschlagt und daher mit breitbandig veränderbarem elektrischem Feld erfüllt ist. Der Vorteil der sich auf dieser Mindestlänge erstreckenden niederohmigen Spannungszuführung mittels der transparenten elektrischen Leitungsbereiche ist also, dass auch bei hohen Bandbreiten eine ausreichende Wechselwirkungszeitdauer zwischen dem elektrischen Feld und dem optischen Modenfeld gewährleistet ist.

Ferner können zur Ein- und/oder Auskopplung von Licht geeignet dimensionierte Übergangsbereiche (sogenannte "Taper") benutzt werden, die eine adiabatische Änderung der Dispersionsrelation bewirken, oder die Ein- und/oder Auskopplung von Licht erfolgt über geeignet dimensionierte Resonatoren. Auch kann das Bauelement in resonanten oder interferometrischen Strukturen eingebettet sein.

Das elektro-optische Bauelement kann insbesondere in einem elektrisch abstimmbaren Dispersionskompensator, einem (Amplituden)-Modulator oder Mach-Zehnder-Interferometer eingesetzt werden, wobei bei dem Mach-Zehnder-Interferometer vorzugsweise mindestens ein Arm ein erfindungsgemäßes elektro-optisches Bauelement in Form eines Phasenschiebers enthält. Besonders bevorzugt enthält das Mach-Zehnder-Interferometer in jedem Arm ein erfindungsgemäßes elektro-optisches Bauelement in Form eines Phasenschiebers, und die in verschiedenen Armen befindlichen Phasenschieber werden mit Spannungen gegensätzlichen Vorzeichens ausgesteuert (sogenannter "Push-Pull-Betrieb").

Die Wechselwirkung zwischen dem optischen Feld und dem von außen angelegten elektrischen Feld ist dann groß, wenn beide Felder denselben Raumbereich ausfüllen. Für einen senkrecht zur (x,y)-Ebene unendlich ausgedehnten Wellenleiter lässt sich dies in erster Näherung durch ein Überlappintegral der Form

$$\Gamma = \iint \left( \chi^{(n)} : \vec{E}_{opt}...\vec{E}_{el}... \right) \cdot \vec{E}_{opt}^{*} \, dxdy \qquad \text{Gl. 1}$$

quantifizieren, wobei $\overline{E}_{opt}(x,y)$ das komplexe elektrische Feld des optischen Modus, $\overline{E}_{el}(x,y)$ das von außen durch die Elektroden angelegte elektrische Feld und $\chi^{(n)}(x,y)$ den nichtlinearen Suszeptibilitätstensor der Ordnung $n$ darstellen. Das Integrationsgebiet umfasst die gesamte Querschnittsfläche des Wellenleiters, ":" bezeichnet das Tensorprodukt, und "·" steht für ein Skalarprodukt zweier Vektoren. Eine hohe Effizienz des Bauelements, z.B. in Form eines Modulators, wird dann erreicht, wenn dieses Überlappintegral große Werte annimmt. Diese Maximierung wird durch eine geeignete Anordnung der Elektroden erreicht. Dazu zählt insbesondere, dass bei der Ausführungsform (A) die Elektroden in kleinem Abstand zum Wellenleiter verlaufen. Um optische Verluste zu vermeiden, werden die vom optischen Feld durchdrungenen Teile der Elektroden aus einem transparenten Material hergestellt.

Maßgeblich für die elektrische Bandbreite des Bauelements ist die Zeit, die benötigt wird, um das elektrische Feld im elektro-optischen Material aufzubauen. Dazu muss die mit diesem elektrischen Feld verknüpfte Kapazität zwischen den einander zugewandten Kanten der transparenten Elektroden bzw. der als Elektroden genutzten Teile des Wellenleiters aufgeladen werden. Dies erfolgt vorzugsweise über die in der Nähe des Wellenleiters verlaufenden Leiterbahnen. Die Leiterbahnen können in hinreichend großem Abstand zum Wellenleiterkern verlaufen, so dass es nicht nötig ist, sie transparent auszulegen. Es können somit insbesondere Metallschichten verwendet, die einfach z.B. mit Wire-bonding-Verfahren kontaktiert werden können (im Gegensatz zu den meisten transparenten elektrisch leitfähigen Materialien). Wichtig für eine hohe Bandbreite ist jedoch eine niederohmige Querverbindung zwischen den Leiterbahnen und den einander zugewandten Kanten der transparenten Elektroden bzw. der als Elektroden genutzten Teilen des Wellenleiters. Dies wird im folgenden etwas genauer quantifiziert.

Fig. 1 zeigt das elektrische Ersatzschaltbild eines Strukturelements der Länge $\Delta z$. $R'$ und $L'$ sind der Widerstands- und Induktivitätsbelag der Leiterbahnen in z-Richtung; $C'$ ist der mit dem aufzubauenden elektrischen Feld verknüpfte Kapazitätsbelag, und $G'$ ist der Leitwertsbelag der Querverbindung zwischen den Leiterbahnen und den einander zugewandten Kanten der transparenten Elektroden bzw. der als Elektroden genutzten Teile des Wellenleiters. Die für die Modulation des optischen Signals relevante Größe ist die zwischen diesen Kanten, d.h. über der Querkapazität $\Delta C_p = C'\Delta z$ abfallende Spannung $U_g(z)$. Der Frequenzgang des Verhältnisses dieser Spannung zur gesamten zwischen den Leiterbahnen herrschenden Spannung U(z) entspricht einem Tiefpasssystem erster Ordnung mit einer 3dB-Grenzfrequenz $f_{3dB}$ von

$$f_{3dB} = G'_p / (2\pi C'_p) . \qquad \text{Gl. 2}$$

Der Kapazitätsbelag $C'$ ist in erster Linie durch den Abstand der Innenkanten der Elektroden bestimmt und daher bereits durch die Maximierung des Feldüberlapps nach Gl. festgelegt. Als einziger freier Parameter zur Erhöhung der elektrischen Bandbreite bleibt also der Leitwertsbelag $G'$, den es zu maximieren gilt. Eine niederohmige und daher breitbandige elektrische Speisung der transparenten Elektroden wird durch flächige, zusammenhängende oder in Ausbreitungsrichtung fortwährend wiederholte Querverbindungen zu den niederohmigen Leiterbahnen erreicht. Da diese Strukturen teilweise in direktem Kontakt mit dem Wellenleiterkern stehen, ist es wichtig, sie so zu gestalten, dass ein Abstrahlen von Licht in oder über diese Bereiche sicher verhindert wird.

Im Folgenden wird die Erfindung anhand von Ausführungsbeispielen und unter Bezugnahme auf die Figuren näher erläutert, wobei gleiche und ähnliche Elemente teilweise mit gleichen.Bezugszeichen versehen sind, die Merkmale der verschiedenen Ausführungsbeispiele miteinander kombiniert werden können und gemeinsam beschriebene Merkmale auch in Alleinstellung wesentlich sein können. Insbesondere sind die Unter- und Obergrenzen von Intervallen auch einzeln zur Definition von einseitig offenen Parameterintervallen zu verstehen.

Kurzbeschreibung der Figuren

Es zeigen:

Fig. 1: Elektrisches Ersatzschaltbid eines Strukurelements der Länge $\Delta z$. Die Längsimpedanz $\Delta Z_s = R'\Delta z + j\omega_e L'\Delta z$ setzt sich aus dem ohmschen und dem induktiven Beitrag der in Längsrichtung verlaufenden Leiterbahnen zusammen. Der Querleitwert $\Delta G_p = G'\Delta z$ repräsentiert die endliche Leitfähigkeit der transparenten Zuleitungsbereiche und $\Delta C_p = C'\Delta z$ die zugehörige Querkapazität. $R', L', G', C'$ sind die Widerstands-, Induktivitäts-, Leitwert- und Kapazitätsbeläge der Anordnung.

Fig. 2(A) bis (C): Schematische Querschnitte durch das Beispiel (A), das das Verständnis der Erfindung erleichtert und die zwei vorstehend bereits erläuterten beispielhaften Ausführungsformen (B) und (C) der Erfindung.

Fig. 3: Perspektivische Querschnitte durch Beispiele, die das Verständnis der Erfindung erleichtern, für Wellenleiter mit ein- oder mehrteiligem Kern und separaten Elektroden, die entsprechend Fig. 2 (A) nicht Bestandteile des Kerns sind.

Fig. 4: Perspektivische Querschnitte durch Beispiele für Wellenleiter, bei denen der Kern als eine der beiden Elektroden entsprechend Fig. 2 (B) genutzt wird.

Fig. 5: Perspektivische Querschnitte durch Beispiele für Wellenleiter bestehend aus zwei voneinander isolierten Streifen, die als Elektroden entsprechend Fig. 2 (C) genutzt werden.

Fig. 6 zeigt das Bauelement aus Fig. 5a) in einer Draufsicht von oben.

Detaillierte Beschreibung der Erfindung

Fig. 2 zeigt schematische Wellenleiterquerschnitte für das Beispiel (A), das das Verständnis der Erfindung erleichtert und die zwei bereits angesprochenen beispielhaften Ausführungsformen (B) und (C) der Erfindung. Maßgeblich ist dabei die prinzipielle Anordnung der verschiedenen Elemente, die geometrischen Formen sind als exemplarisch anzusehen. Die Substrate 11, 21, 31 können aus einer oder mehreren, hier nicht unterschiedenen Schichten bestehen, die beispielsweise zur Realisierung von elektrischen Bauelementen dienen können.

Die zur Änderung der Transmissionseigenschaften anzulegende Spannung U ist in Fig. 2 jeweils eingezeichnet. Diese Spannung und/oder der von ihr hervorgerufene Stromfluss erlauben es, die Transmissionseigenschaften des Wellenleiters zu verändern.

In Fig. 2 (A) wird der hochbrechende ein- oder mehrteilige Wellenleiterkern 12 von einem oder mehreren niedrigbrechenden Materialen 15a, 15b umgeben, von denen mindestens eines elektro-optische Eigenschaften aufweist. Dabei reicht das Modenfeld des im Wellenleiter geführten Lichtes in das elektro-optische Material hinein. Über transparente Elektroden 14a, 14b, die dicht entlang des Wellenleiters verlaufen und durch optisch transparente elektrische Leitungsschichten gebildet werden, lässt sich im elektro-optischen Material ein räumlich konzentriertes elektrisches Feld erzeugen, das einen großen Überlapp mit dem optischen Modenfeld aufweist. Zur Senkung des Zuleitungswiderstandes können die transparenten Elektroden zusätzlich in elektrischem Kontakt mit niederohmigen, in einem gewissen Abstand zum Wellenleiter verlaufende Leiterbahnen 13a, 13b stehen. Die gesamte Anordnung kann auf einem Substrat 11 integriert werden. Die Elektroden können aus einem beliebigen, leitfähigen, optisch transparenten Material beschaffen sein, dürfen jedoch die Führung des Lichtes entlang des Kerns 12 nicht nachteilig beeinflussen.

Ein großer Überlapp der Felder wird durch eine geeignete, aufeinander abgestimmte Anordnung und Form der Elektroden 14a, 14b und des Wellenleiterkerns 12 erreicht. Einen Anhaltspunkt für das Design bietet z. B. die folgende Überlegung: Es seien $P_1$ und $P_2$ diejenigen in einer gemeinsamen Querschnittsebene des Wellenleiters liegenden Punkte auf den Elektroden 14a und 14b, die minimalen Abstand zueinander aufweisen. In dieser Querschnittsebene stellt die Strecke $P_1P_2$ also die kürzeste Verbindung zwischen den beiden Elektroden dar. Wird eine Spannung an die Elektroden angelegt, so treten in der Umgebung dieser Strecke die höchsten Feldstärken auf. Um einen guten Überlapp der optischen Modenfeldes und des zwischen den Elektroden herrschende elektrischen Feldes zu erreichen, werden die Elektroden 14a, 14b so um den Wellenleiterkern positioniert, dass, wie in Fig. 2 (A) gezeigt, die Strecke $P_1P_2$ den Wellenleiterkern durchdringt und von diesem in zwei näherungsweise gleich lange Abschnitte geteilt wird. Darüber hinaus wird die Form und der Abstand der Elektroden 14a, 14b zusammen mit der Form des Wellenleiterkerns 12 so gewählt, dass technologische Randbedingungen erfüllt und der Feldüberlapp nach Gl. 1 maximal wird.

In Fig. 2 (B) ist der ein- oder mehrteilige Wellenleiterkern 22 selbst elektrisch leitfähig und wird als eine der Elektroden genutzt. Bei einem mehrteiligen Wellenleiterkern liegen alle Bestandteile des Kerns auf demselben elektrischen Potential. Der Kern ist von niedrigbrechendem Material 25a, 25b umgeben, welches im Bereich 25a elektro-optische Eigenschaften aufweist. Eine zweite, ggf. transparente Elektrode 24b, welche von einer optisch transparenten elektrischen Leitungsschicht gebildet wird, ist so angeordnet, dass das elektro-optische Material 25a zwischen ihr und dem Wellenleiterkern 22 liegt. Der Wellenleiterkern 22 steht über einen ein- oder mehrteiligen transparenten Zuleitungsbereich 24a in elektrischem Kontakt mit mindestens einer entlang des Wellenleiters verlaufenden Leiterbahn 23a. Die Elektrode 24b kann ebenfalls mit einer in der Nähe verlaufenden Leiterbahn 23b in elektrischem Kontakt stehen. Die gesamte Anordnung kann auf einem Substrat 21 integriert werden, d.h. das Umgebungsmaterial ist ein aufgebrachtes Material und nicht Bestandteil des Substrats selbst.

In Fig. 2 (C) besteht der Wellenleiterkern aus zwei hochbrechenden, elektrisch voneinander isolierten Streifen 32a und 32b, die von einem oder mehreren niedrigbrechenden Materialen 35a und 35b umgeben sind, von denen mindestens eines elektro-optische Eigenschaften aufweist. Die Teile 32a und 32b sind selbst leitfähig, fungieren als Elektroden und erhalten durch Anlegen einer Spannung unterschiedliche elektrische Potentiale. Sie werden durch transparente Zuleitungsbereiche 34a und 34b niederohmig mit mindestens einer entlang des Wellenleiters verlaufenden Leiterbahnen 33a, 33b verbunden. Die gesamte Anordnung kann auf einem Substrat 31 integriert werden.

Bei dem Beispiel gemäß Fig. 2(A), das das Verständnis der Erfindung erleichtert und der Ausführungsform gemäß Fig. 2(B) müssen i.a. keine schmalen Spalte mit einem elektro-optischen Material befüllt werden - im Gegensatz zu der in Fig. 2 (C) gezeigten Struktur. Die Strukturen (A) und (B) sind daher in der Regel einfacher zu realisieren, weisen aber im allgemeinen einen schlechteren Überlapp zwischen optischem und elektrischem Feld auf als Struktur (C).

Bei den in Fig. 2 (B) bzw. Fig. 2 (C) gezeigten Strukturen grenzt der lichtführende Kern des Wellenleiters 22 bzw. 32a, 32b direkt an die transparenten Zuleitungsbereiche 24a bzw. 34a, 34b, d.h. wird von diesen unmittelbar kontaktiert. Diese Zuleitungsbereiche müssen daher so beschaffen sein, dass ein Abstrahlen von optischer Leistung verhindert wird. Dies lässt sich entweder durch die Wahl von Werkstoffen mit hinreichend kleinem Brechungsindex erreichen, oder aber durch eine geeignete Formgebung dieser Bereiche. Sie können beispielsweise als dünne Schichten realisiert werden, oder auch eine Strukturierung aufweisen, die im entsprechenden Wellenlängenbereich eine photonische Bandlücke besitzt. Damit ist es also insbesondere möglich, für den Wellenleiterkern und die Zuleitungsbereiche denselben Werkstoff, z.B. einen Halbleiter, zu verwenden.

Die vorstehend beschriebenen Anordnungen müssen nicht notwendigerweise auf Substraten integriert werden. Die Wellenleiterkerne oder deren Bestandteile 12 bzw. 22 bzw. 32a, 32b können beispielsweise auch aus dünnen Fasern bestehen, die in dem niedrigbrechenden Umgebungsmaterial eingebettet sind. Solche Fasern lassen sich beispielsweise recht einfach durch Ziehen von geeigneten Materialien herstellen. Ein derartiges Ausführungsbeispiel ist nicht dargestellt.

In allen drei dargestellten Beipielen (A) und Ausführungsformen (B) und (C) führt ein hoher Indexkontrast an den Grenzflächen zwischen den Wellenleiterkernen 12 bzw. 22 bzw. 32a, 32b und den jeweils benachbarten niedrigbrechenden Umgebungsmaterialien 15a, 15b bzw. 25a, 25b bzw. 35a, 35b zu einem Sprung der Normalkomponente des elektrischen Feldes. Bei geeigneter Wahl der Polarisation des elektrischen Feldes kann diese Unstetigkeit gezielt dazu genutzt werden, die Interaktion des geführten Lichtes mit dem Umgebungsmaterial zu erhöhen.

Besonders hohe elektrische Bandbreiten lassen sich erreichen, wenn das elektrische und das optische Signal mit gleichen Gruppengeschwindigkeiten propagieren. Diese sogenannte Wanderfeldanordnung lässt sich z.B. durch ein geeignetes Design der elektrischen Leiterbahnen erzielen, oder durch eine geeignete Gestaltung des Wellenleiters bzw. dessen Umgebungsmaterials. Hier erweist sich ein hoher Indexkontrast zwischen Kern- und Mantelmaterial sehr vorteilhaft: Der Bereich, über den sich der effektive Brechungsindex $n_e$ des optischen Modus einstellen lässt, ist nach oben durch den Brechungsindex des Kerns und nach unten durch größten im Mantelmaterial auftretenden Brechungsindex beschränkt. Bei einem Hochindexkontrast-Wellenleiter-Bauelement lässt sich also $n_e$ über einen sehr großen Bereich variieren. Gleiches gilt für die Gruppengeschwindigkeit des optischen Modus, die somit gut an die Geschwindigkeit des elektrischen Signals angepasst werden kann.

In den nachfolgenden Figuren und Beschreibungen werden verschiedene Ausführungsbeispiele zu dem Beispiel aus Fig. 2(A), das das Verständnis der Erfindung erleichtert und den Ausführungsformen aus Fig. 2 (B) und (C) der Erfindung dargestellt. Alle Figuren sind schematisch zu verstehen und sind insbesondere nicht maßstabsgetreu. Das unterliegende Substrat 11, 21, 31 ist der Übersichtlichkeit halber nicht dargestellt.

Die im folgenden für SOI-basierte Realisierungen genannten Werkstoffe, Werkstoffkombinationen und Maßangaben sind als beispielhaft anzusehen und erheben keinen Anspruch auf Vollständigkeit oder Ausschließlichkeit. Alle im folgenden angegebenen Brechungsindizes *n* beziehen sich - wenn nicht anders angegeben - auf eine Wellenlänge von 1550nm und sind ebenfalls als beispielhaft für die in der optischen Nachrichtentechnik gebräuchlichen Spektralbereiche anzusehen.

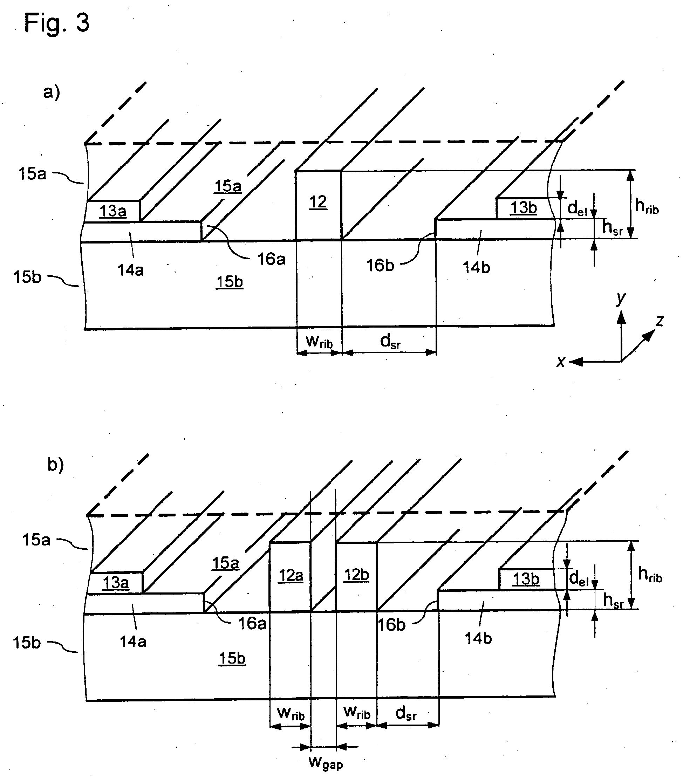

Die in Fig. 3 beispielhaft gezeigten Strukturen beruhen auf dem in Fig. 2 (A) skizzierten Prinzip. Der Wellenleiterkern wird nur zur Führung des Lichtes verwendet und nicht als Elektrode genutzt. Die externe Spannung wird zwischen den Leiterbahnen 13a und 13b angelegt.

Fig. 3 a) zeigt beispielhaft eine Struktur, deren Wellenleiterkern 12 aus einem Streifen hochbrechenden Materials besteht und sich auf einer niedrigbrechenden, nicht notwendigerweise elektro-optischen Schicht 15b befindet. Der Wellenleiterkern ist von einem elektro-optischen Material 15a überdeckt. Das elektrische Feld bildet sich aus zwischen beiderseitig entlang und in der Nähe des Wellenleiterkerns verlaufenden transparenten Elektroden 14a, 14b, genauer zwischen den sich gegenüberliegenden Seiten 16a, 16b. Die Leiterbahnen 13a und 13b senken ggf. den elektrischen Widerstandsbelag R' der Struktur.

Für eine SOI-basierte Realisierung der Struktur kann der Wellenleiterkern 12 beispielsweise aus Silizium (Si, n=3,48) oder einer Siliziumverbindung (Siliziumnitrid, Siliziumoxinitrid, Siliziumcarbid etc.) bestehen, und als unterliegende Schicht 15b kann das vergrabene Oxid ($SiO_2$, $n$=1,44) genutzt werden. Insbesondere beträgt der Brechungsindex des Wellenleiterkerns vorzugsweise zwischen 3,4 und 3,6 und der Brechungsindex des Umgebungsmaterials zwischen 1,4 und 2,4, so dass der Brechungsindex des Wellenleiterkerns vorzugsweise um mindestens 1 oder um 1 bis 2,2 größer als der Brechungsindex des Umgebungsmaterials ist. Es können jedoch auch Chalcogenid-Gläser als Umgebungsmaterial verwendet werden, welche einen Brechungsindex bis etwa 3,0 aufweisen, so dass auch Brechungsindexunterschiede ab 0,4 in Betracht kommen können.

Die Breite $w_{rib}$ des Wellenleiterkerns 12 und die Höhe $h_{rib}$ des Wellenleiterkerns 12 bewegen sich dann bevorzugt im Bereich 50nm bis 1$\mu$m. Die Dicke $h_{sr}$ der transparenten Leitungsbereiche bzw. Elektroden 14a, 14b liegt bevorzugt im Bereich 20nm bis 3$\mu$m, bevorzugt ist die Dicke $h_{sr}$ kleiner als 1 $\mu$m, besonders bevorzugt kleiner als 300 nm. Der Abstand $d_{sr}$ der transparenten Leitungsbereiche 14a, 14b vom Wellenleiterkern 12 liegt vorzugsweise im Bereich 100nm bis 20$\mu$m. Für die transparenten Leitungsbereiche 14a und 14b wird z.B. dotiertes Silizium oder ein Metalloxid verwendet. Die Leiterbahnen 13a und 13b sind beispielsweise aus einem Metall hergestellt.

Bei dem elektro-optischen Material kann es sich neben den einschlägig bekannten anorganischen Kristallen ($LiNbO_3$, BBO) beispielsweise um ein funktionalisiertes Polymer, z.B. ein "guest-host"-Polymer oder "cross-linked" Polymer, um einen organischen Kristall, z.B. DAST (4-N, N-dimethylamino-4'-N'-methyl-stilbazolium tosylate) oder DAT2 (2-{3-[2-(4-dimethylaminophenyl)vinyl]-5,5-dimethyl cyclohex-2-enylidene}malononitrile), oder um ein organisches Salz, z.B. DSTMS (4-N, N-dimethylamino-4'-N'-methyl-stilbazolium 2,4,6-trimethylbenzenesulfonate) oder DSNS (4-N, N-dimethylamino-4'-N'-methyl-stilbazolium 2-naphthalenesulfonate) handeln. Diese Materialien müssen ggf. durch Anlegen einer Spannung gepolt werden. Ferner lassen sich elektro-optische Wechselwirkungen in Materialien erzielen, die nur über einen nichtlinearen Effekt dritter Ordnung verfügen (quadratischer elektro-optischer Effekt), bespielsweise Gläser (Chaclogenid-Gläser). Diese Materialien können durch Anlegen einer Spannung gepolt werden ("poled glass").

Fig. 3 b) zeigt beispielhaft eine ähnliche Struktur wie Fig. 3 a). Allerdings besteht hier der Wellenleiterkern aus zwei Streifen 12a und 12b des hochbrechenden Materials. Das elektro-optische Material 15a umgibt den Wellenleiter und füllt insbesondere den zwischen den Streifen 12a und 12b befindlichen Spalt ganz oder teilweise. Durch diese Anordnung ist es möglich, einen großen Teil der optischen Leistung im elektro-optischen Material 15a zu führen und trotzdem den Durchmesser des Modenfeldes und damit das vom elektrischen Feld auszufüllende Volumen klein zu halten. Für eine SOI-basierte Realisierung bewegt sich die Breite $w_{rib}$ der Wellenleiterkernstreifen 12a, 12b bevorzugt im Bereich 50nm bis 800nm. Die Höhe $h_{rib}$ der Wellenleiterkernstreifen 12a, 12b liegt bevorzugt im Bereich 50nm bis 1$\mu$m. Der Abstand $w_{gap}$ zwischen den Wellenleiterkernstreifen 12a, 12b liegt bevorzugt im Bereich 30nm bis 500nm. Die Dicke $h_{sr}$ der transparenten Leitungsbereiche bzw. Elektroden 14a, 14b liegt bevorzugt im Bereich 20nm bis 3$\mu$m, und der Abstand $d_{sr}$ der transparenten Leitungsbereiche bzw. Elektroden 14a, 14b von den Wellenleiterkernstreifen 12a, 12b liegt bevorzugt im Bereich 100nm bis 20$\mu$m.

Bei den in Fig. 3 gezeigten Bauteilen beträgt die Wechselwirkungslänge zwischen dem angelegten elektrischen und dem optischen Feld bevorzugt höchstens 15mm, besonders bevorzugt höchstens 7,5mm, 2mm oder 1mm. Die Dicke der $d_{el}$ der Leitungsbereiche liegt bevorzugt zwischen 20nm und 2$\mu$m, besonders bevorzugt zwischen 50nm und 1$\mu$m.

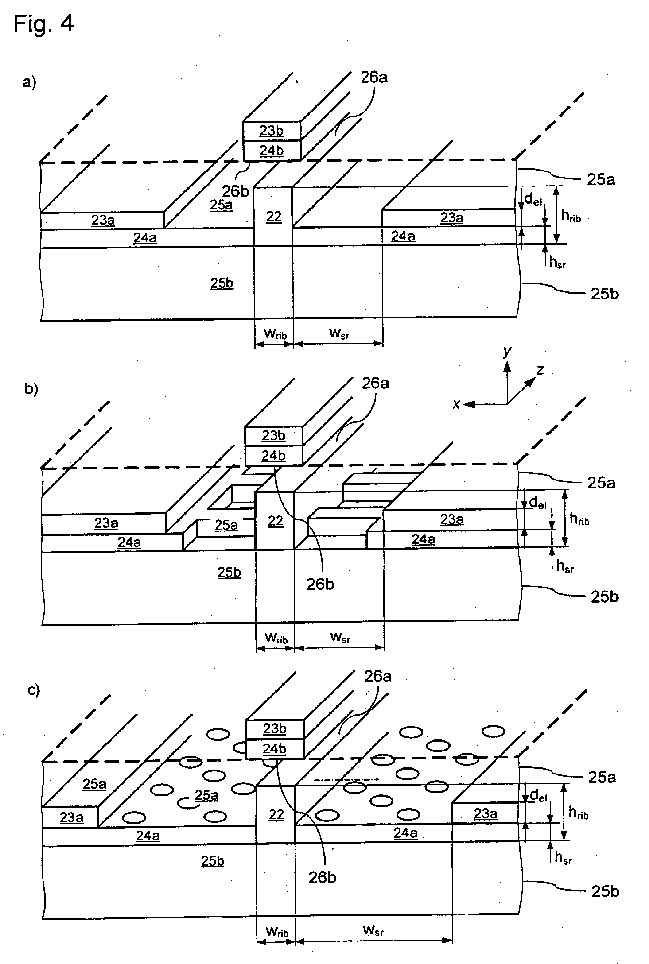

Die in Fig. 4 beispielhaft gezeigten Strukturen beruhen auf dem in Fig. 2 (B) skizzierten Prinzip. Der Wellenleiterkern wird als die eine Elektrode genutzt, wobei bei einem mehrteiligen Kern alle Bestandteile das gleiche elektrische Potential aufweisen. Dasselbe gilt für die Bestandteile der Leiterbahnen 23a. Sie sind über die elektrisch leitfähigen Bereiche 24a und ggf. den Kern 22 elektrisch miteinander verbunden und haben daher das gleiche Potential. Die externe Spannung wird zwischen den Leiterbahnen 23a und 23b angelegt. Natürlich lassen sich auch asymmetrische Strukturen realisieren, bei denen der rechte oder linke Teil.der Leiterbahnen 23a und der zugehörige Zuleitungsbereich entfallen.

In Fig. 4 a) besteht der Wellenleiterkern 22 beispielsweise aus einem Streifen elektrisch leitfähigen, hochbrechenden Materials, der sich auf einer niedrigbrechenden, nicht notwendigerweise elektro-optischen Schicht 25b befindet. Er dient gleichzeitig als Elektrode, und ist über leitfähige, optisch transparente, entlang des Wellenleiters beidseits flächig ausgedehnte Schicht 24a mit in der Nähe des Wellenleiters verlaufenden, beispielsweise metallischen Leiterbahnen 23a verbunden. Ein Überkoppeln von optischer Leistung in die Schicht 24a wird dadurch verhindert, dass deren Dicke $h_{sr}$ hinreichend klein gewählt wird und/oder der verwendete Werkstoff einen geringeren Brechungsindex aufweist als der Wellenleiterstreifen 22. Für eine geeignete Wahl von $h_{sr} < h_{rib}$ ist es insbesondere möglich, für die funktionell als Zuleitung wirkende Schicht 24a denselben Werkstoff zu verwenden wie für die Wellenleiterstreifen 22. Der Wellenleiterkern 22 ist von einem elektro-optischen Material 25a überdeckt, auf dem eine transparente Gegenelektrode 24b aufgebracht ist, welche ebenfalls durch eine leitfähige, optisch transparente Schicht gebildet wird. Die sich gegenüberliegenden Seiten der Elektroden sind mit 26a, 26b bezeichnet. Die Gegenelektrode 24b steht zur Senkung des elektrischen Widerstandsbelag R' mit einer in der Nähe des Wellenleiters verlaufenden, optisch nicht transparenten Metall-Leiterbahn 23b in Kontakt.

Für eine SOI-basierte Realisierung der Struktur kann der Wellenleiterkern 22 beispielsweise aus dotiertem Silizium (Si, $n$=3,48) oder einem Metalloxid bestehen, und als unterliegende Schicht 25b wird z.B. das vergrabene Oxid (SiO$_2$, $n$=1,44) genutzt. Die Breite $w_{rib}$ und die Höhe $h_{rib}$ des Wellenleiterkerns 22 bewegen sich dann bevorzugt im Bereich 50nm bis 1$\mu$m. Die Dicke $h_{sr}$ der transparenten Leitungsbereiche 24a und/oder 24b liegt bevorzugt im Bereich 20nm bis 3$\mu$m, und der Abstand $w_{sr}$ der Leiterbahnen 23a vom Wellenleiterkern 22 ist bevorzugt größer als 300nm. Für die transparenten Zuleitungsbereiche 24a wird z.B. dotiertes Silizium oder ein Metalloxid verwendet. Ebenso besteht die Gegenelektrode 24b beispielsweise aus einem Metalloxid. Die Leiterbahnen 23a und 23b werden beispielsweise aus einem Metall hergestellt und das elektro-optische Material ist z.B. ein Polymer.

Die in Fig. 4 b) beispielhaft gezeigte Struktur ist mit der in 4 a) gezeigten verwandt. Allerdings besitzen die Zuleitungsbereiche 24a in Ausbreitungsrichtung fortwährend wiederholte Stege aus dem elektrisch leitfähigen, optisch transparenten Material. Durch eine geeignete Wahl der Abstände und Breiten dieser Stege lässt sich die Dispersionsrelation des optischen Wellenleiters einstellen. Dies kann beispielsweise dazu genutzt werden, die Länge des Bauelements zu verringern, indem beispielsweise die Gruppengeschwindigkeit des geführten Lichtes herabgesetzt und damit die Interaktionszeit verlängert wird. Ferner kann die Gruppengeschwindigkeit des optischen Modus an die des elektrischen Signals angepasst und so ein Bauelement mit hoher Bandbreite erzielt werden (Wanderwellenanordnung). Für die Stege wird z.B. dotiertes Silizium oder ein Metalloxid verwendet.

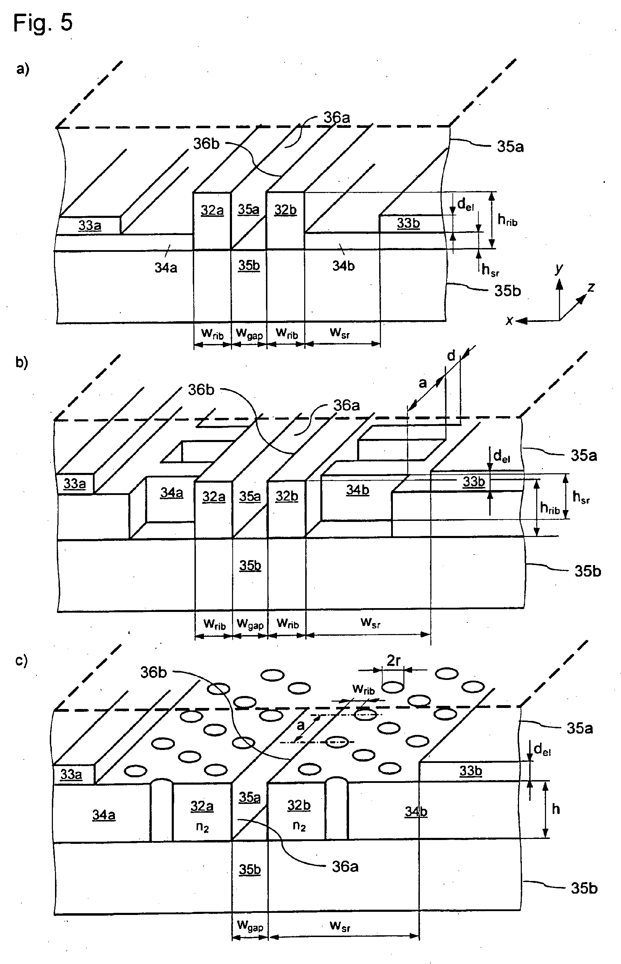

Die in Fig. 4 c) beispielhaft gezeigte Struktur ist ebenfalls mit der in 4 a) gezeigten verwandt. Im Gegensatz zu 4 a) weisen hier die Zuleitungsbereiche 24a allerdings eine spezielle Formgebung auf. Sie bestehen aus einem zusammenhängenden Gebiet eines elektrisch leitfähigen, optisch transparenten Materials, das so strukturiert ist, dass es eine photonische Bandlücke (photonic band-gap, PBG) aufweist und somit ein Abstrahlen von optischer Leistung in und durch diese Bereiche minimiert wird. Damit ist es insbesondere möglich, für die Zuleitungsbereiche 24a denselben Werkstoff und dieselbe Schichtdicke zu verwenden wie für den Wellenleiterkern 22 (in Fig. 4c nicht dargestellt, vgl. aber Fig. 5c). Zusätzlich kann die Dispersionsrelation des optischen Wellenleiters durch ein geeignetes Design der an den Kern angrenzenden Bereiche der PBG-Struktur eingestellt werden. Dies kann insbesondere dazu genutzt werden, die Länge des Bauelements zu verringern, indem beispielsweise die Gruppengeschwindigkeit des geführten Lichtes herabgesetzt und damit die Interaktionszeit verlängert wird. Ferner kann die Gruppengeschwindigkeit des optischen Modus an die des elektrischen Signals angepasst und so ein Bauelement mit hoher Bandbreite erzielt werden (Wanderwellenanordnung).

Bei den in Fig. 4 gezeigten Bauteilen beträgt die Wechselwirkungslänge zwischen dem angelegten elektrischen und dem optischen Feld bevorzugt höchstens 15mm, besonders bevorzugt höchstens 7,5mm, 2mm oder 1mm. Die Dicke der $d_{el}$ der Leitungsbereiche liegt bevorzugt zwischen 20nm und 2$\mu$m, besonders bevorzugt zwischen 50nm und 1$\mu$m.

Die in Fig. 5 beispielhaft gezeigten Strukturen beruhen auf dem in Fig. 2 (C) skizzierten Prinzip: Der Wellenleiterkern besteht aus zwei Teilen oder Streifen 32a und 32b, die selbst als Elektroden genutzt werden und zwischen denen die externe Spannung angelegt wird.

In Fig. 5 a) besteht der Wellenleiterkern aus zwei elektrisch leitfähigen, voneinander isolierten parallelen Streifen 32a und 32b aus einem optisch transparenten hochbrechenden Material. Diese Streifen 32a, 32b fungieren gleichzeitig als Elektroden mit sich gegenüberliegenden Seiten 36a, 36b. Sie befinden sich auf einer elektrisch isolierenden, niedrigbrechenden, nicht notwendigerweise elektro-optischen Schicht 35b. Das Licht wird entlang des zwischen den Streifen 32a, 32b befindlichen Spaltes geführt, in dem durch die angelegte Spannung U ein starkes elektrisches Feld erzeugt wird. Die Streifen 32a und 32b sind von einem niedrigbrechenden Material 35a umgeben, das elektro-optische Eigenschaften aufweist und das insbesondere auch den Spalt zwischen den Streifen 32a, 32b ganz oder teilweise ausfüllt. Die elektrische Spannung wird über ebenfalls leitfähige und optisch transparente, entlang des Wellenleiters flächig ausgedehnte Zuleitungsschichten 34a und 34b zugeführt. Ein Überkoppeln von optischer Leistung in diese Schichten wird dadurch verhindert, dass deren Dicke $h_{sr}$ hinreichend klein gewählt wird und/oder der verwendete Werkstoff einen geringeren Brechungsindex aufweist als die Wellenleiterstreifen 32a und 32b. Für eine geeignete Wahl von $h_{sr} < h_{rib}$ ist es insbesondere möglich, für die Zuleitungsbereiche 34a und 34b denselben Werkstoff zu verwenden wie für die Wellenleiterstreifen 32a und 32b. Zusätzliche, nicht notwendigerweise transparente Leiterbahnen 33a und 33b senken ggf. den elektrischen Widerstandsbelag R' der Struktur.

Für eine SOI-basierte Realisierung der Struktur können die den Wellenleiterkern bildenden Streifen 32a und 32b beispielsweise aus dotiertem Silizium (Si, $n$=3,48) bestehen, und als unterliegende Schicht 35b kann das vergrabene Oxid (SiO$_2$, $n$=1,44) genutzt werden. Die Breite $w_{rib}$ der Wellenleiterkernstreifen 32a, 32b bewegt sich dann bevorzugt im Bereich 50nm bis 800nm. Die Höhe $h_{rib}$ der Wellenleiterkernstreifen 32a, 32b liegt bevorzugt im Bereich 50nm bis 1$\mu$m. Der Abstand $w_{gap}$ der Wellenleiterkernstreifen 32a, 32b voneinander liegt bevorzugt im Bereich 30nm bis 500nm. Die Dicke $h_{sr}$ der optisch transparenten Leitungsbereiche 34a, 34b liegt bevorzugt im Bereich 20nm bis 3$\mu$m, und der Abstand $w_{sr}$ der nicht transparenten Leiterbahnen 33a, 33b von den Wellenleiterkernstreifen 32a, 32b ist bevorzugt größer als 300nm.

Für die transparenten Zuleitungsbereiche 34a und 34b kann z.B. dotiertes Silizium oder ein Metalloxid verwendet werden. Die Leiterbahnen 33a und 33b können beispielsweise aus einem Metall hergestellt werden, und das elektro-optische Material kann ein Polymer sein.

Die in Fig. 5 b) beispielhaft gezeigte Struktur ist mit der in 5 a) gezeigten verwandt. Allerdings umfassen die Zuleitungsbereiche 34a und 34b hier Stege aus einem elektrisch leitfähigen, optisch transparenten Material, die entlang der Ausbreitungsrichtung fortlaufend wiederholt werden. Für eine SOI-basierte Realisierung ist der Stegabstand a bevorzugt größer als 30nm, und die Stegbreite d nimmt bevorzugt Werte zwischen größer als 20nm an.

Durch eine geeignete Wahl der Form, d.h. insbesondere der Abstände und Breiten dieser Stege lässt sich die Dispersionsrelation des optischen Wellenleiters einstellen. Dies kann insbesondere wieder dazu genutzt werden, die Länge des Bauelements zu verringern, indem beispielsweise die Gruppengeschwindigkeit des geführten Lichtes herabgesetzt und damit die Interaktionszeit verlängert wird. Ferner kann die Gruppengeschwindigkeit des optischen Modus an die des elektrischen Signals angepasst und so ein Bauelement mit hoher Bandbreite erzielt werden (Wanderwellenanordnung).

Die in Fig. 5 c) dargestellte Struktur ist ebenfalls mit der in 5 a) beschriebenen verwandt. Im Gegensatz zu 5 a) weisen hier die Zuleitungsbereiche 34a und 34b allerdings eine spezielle Formgebung auf. Sie bestehen aus einem zusammenhängenden Gebiet eines elektrisch leitfähigen, optisch transparenten Materials, das so strukturiert ist, dass es im entsprechenden Wellenlängenbereich eine photonische Bandlücke (photonic band-gap, PBG) besitzt und somit ein Abstrahlen von optischer Leistung in und durch diese Bereiche minimiert wird. Damit ist es insbesondere auch möglich, für die Zuleitungsbereiche 34a und 34b denselben Werkstoff und dieselbe Schichtdicke zu verwenden wie für die Wellenleiterstreifen 32a, 32b. Dieser Spezialfall ist in Fig. 5 c) dargestellt. Für eine SOI-basierte Realisierung bewegt sich die Breite $w_{rib}$ der Wellenleiterkernstreifen 32a, 32b bevorzugt im Bereich 50nm bis 800nm. Die Dicke h der Wellenleiterkernstreifen 32a, 32b sowie der transparenten Leitungsbereiche 34a, 34b liegt bevorzugt im Bereich 50nm bis 1μm und der Abstand $w_{gap}$ der Wellenleiterkernstreifen 32a, 32b voneinander liegt bevorzugt zwischen 30nm und 500nm, besonders bevorzugt zwischen 30nm und 200nm. Abhängig von der Dicke h bewegt sich der Lochabstand a bevorzugt im Bereich 200nm bis 600nm und das Verhältnis $r/a$ (r: Lochradius) nimmt bevorzugt Werte zwischen 0,2 und 0,45, ggfs. auch zwischen 0,15 und 0,4 an.

Zusätzlich kann die Dispersionsrelation des optischen Wellenleiters durch ein geeignetes Design der an den Kern angrenzenden Bereiche der PBG-Struktur eingestellt werden. Dazu werden die Durchmesser und Positionen der dem Kern benachbarten Löcher in geeigneter Weise variiert. Dies kann insbesondere dazu genutzt werden, die Länge des Bauelements zu verringern, indem beispielsweise die Gruppengeschwindigkeit des geführten Lichtes herabgesetzt, damit die Interaktionszeit verlängert und die erforderliche Wechselwirkungslänge verkürzt wird. Die Gruppengeschwindigkeit des Lichtes ist dabei vorzugsweise kleiner oder gleich 35 %, besonders bevorzugt kleiner oder gleich 10 %, ggf. sogar kleiner oder gleich 5 % der Vakuumlichtgeschwindigkeit. Zudem lässt sich die chromatische Dispersion des optischen Modus durch ein geeignetes Wellenleiterdesign einstellen. Dies erlaubt beispielsweise den Bau von Dispersionskompensatoren.

Ferner kann die Gruppengeschwindigkeit des optischen Modus an die des elektrischen Signals angepasst und so ein Bauelement mit hoher Bandbreite erzielt werden (Wanderwellenanordnung).

Bei den in Fig. 5 gezeigten Bauteilen beträgt die Wechselwirkungslänge zwischen dem angelegten elektrischen und dem optischen Feld bevorzugt höchstens 7,5mm, besonders bevorzugt höchstens 2,5mm, 1mm oder 500μm. Die Dicke der $d_{el}$ der Leitungsbereiche liegt bevorzugt zwischen 20nm und 2μm, besonders bevorzugt zwischen 50nm und 1μm.

Wird bei den vorgenannten Strukturen durch ein geeignetes Design zusätzlich die Gruppengeschwindigkeit des geführten Lichtes herabgesetzt, so sind Bauteile von einer Interaktionslänge von bevorzugt maximal 250μm, besonders bevorzugt maximal 100μm möglich. Gleiches gilt für die Verwendung der vorgenannten Strukturen in resonanten Anordnungen.

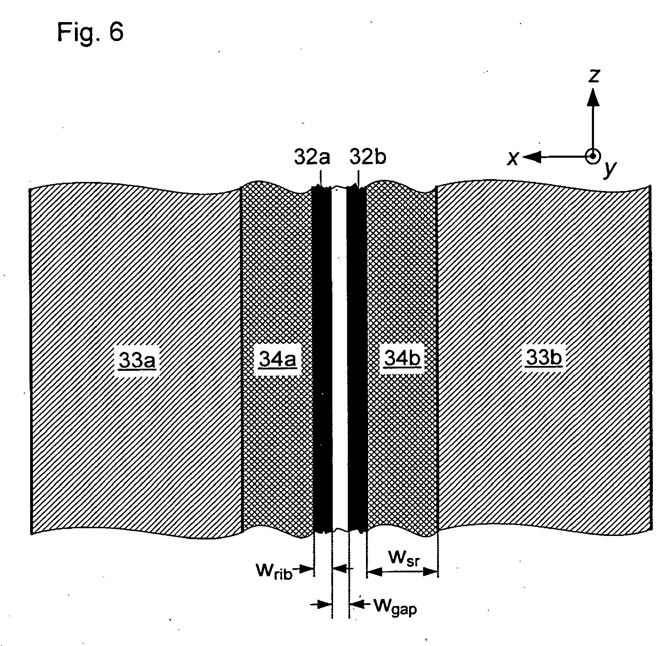

Fig. 6 zeigt das Bauelement aus Fig. 5a) in einer Draufsicht von oben. Das elektro-optische Umgebungsmaterial 35a, welches zwischen den beiden Streifen 32a, 32b eingebracht ist und die Streifen 32a, 32b sowie die optisch transparenten Zuleitungen 34a, 34b und teilweise die Leiterbahnen 33a, 33b überdeckt, ist nicht dargestellt. Die optisch transparenten Zuleitungen 34a, 34b sowie die Leiterbahnen 33a, 33b erstrecken sich auf einer Länge von, in diesem Beispiel, einigen hundert Mikrometern in der Ausbreitungsrichtung des Lichts (z-Richtung), jeweils auf den voneinander abgewandten Seiten der Wellenleiterkern-Streifen 32a, 32b und sind auf der gesamten Länge elektrisch mit dem zugehörigen Streifen kontaktiert. In diesem Beispiel sind hierzu die Leiterbahnen 33a und 33b in Form von Metallschichten ausgebildet, welche flächig auf den Leitungsbereichen 34a bzw. 34b abgeschieden sind. Die Leitungsbereiche 34a, 34b sind ebenfalls auf der gesamten Länge von einigen hundert Mikrometern (Kontaktierungslänge) mit den zugehörigen Streifen 32a, 32b unmittelbar elektrisch verbunden, so dass das Modenfeld bei einer Gruppengeschwindigkeit des etwa 0,35-fachen der Vakuumlichtgeschwindigkeit einige Pikosekunden innerhalb der Kontaktierungslänge propagiert. Der Wellenleiterkern 32a, 32b kann sich noch über die Kontaktierungslänge hinaus in der Ausbreitungsrichtung erstrecken, um die optischen Signale ein- und auszukoppeln.

Für alle Ausführungsbeispiele gilt demnach vorzugsweise Folgendes:

Die beiden transparenten Leitungsbereiche sind nicht zugleich in derselben Ebene und auf derselben Seite des Wellenleiterkerns angeordnet, sondern der Wellenleiterkern ist vorzugsweise zwischen den transparenten Leitungsbereichen angeordnet, so dass eine Unterbrechung des Wellenleiterkerns auf der Wechselwirkungslänge vermieden wird.

Die transparenten Leitungsbereiche 14a, 14b; 24a, 24b; 34a, 34b (Zuleitungen oder Elektroden) verlaufen parallel zu dem ein- oder mehrteiligen Wellenleiterkern 12; 12a, 12b; 22; 32a, 32b. Die transparenten Leitungsbereiche 14a, 14b; 24a, 24b; 34a, 34b grenzen entweder unmittelbar an den ein- oder mehrteiligen Wellenleiterkern 12; 12a, 12b; 22; 32a, 32b an oder verlaufen in geringem Abstand von diesem, so dass der Mindestabstand der transparenten Leitungsbereiche 14a, 14b; 24a, 24b; 34a, 34b voneinander im Wesentlichen durch die Breite $w_{rib}$ des Wellenleiterkerns bzw. durch die Breite $w_{rib}$ der Wellenleiterkernstreifen und den Abstand $w_{gap}$ zwischen den Wellenleiterkernstreifen definiert wird. D.h. dass der Abstand zwischen den beiden transparenten Leitungsbereichen 14a, 14b; 24a, 24b; 34a, 34b zueinander bevorzugt $\geq 50$ nm beträgt. Andererseits ist der Abstand $d_{sr}$ der transparenten Leitungsbereiche 14a, 14b; 24a, 24b; 34a, 34b (Zuleitungen oder Elektroden) von dem ein- oder mehrteiligen Wellenleiterkern 12; 12a, 12b; 22; 32a, 32b bevorzugt kleiner oder gleich 20 $\mu$m, kleiner oder gleich 2,5 $\mu$m, kleiner oder gleich 1 $\mu$m oder kleiner oder gleich 500 nm.

Ferner ist der Abstand der nicht transparenten elektrischen Leiterbahnen 13a, 13b; 23a, 23b; 33a, 33b von dem Wellenleiterkern und/oder voneinander größer als der Abstand der transparenten Leitungsbereiche 14a, 14b; 24a, 24b; 34a, 34b von dem Wellenleiterkern und/oder voneinander. Dabei beträgt der Abstand der nicht transparenten elektrischen Leiterbahnen 13a, 13b; 23a, 23b; 33a, 33b von dem ein- oder mehrteiligen Wellenleiterkern 12; 12a, 12b; 22; 32a, 32b vorzugsweise $\geq 300$ nm, $\geq 1$ $\mu$m, $\geq 10$ $\mu$m oder $\geq 20$ $\mu$m.

Im Folgenden werden bestimmte allgemeine bevorzugte Eigenschaften der Erfindung nochmals kurz zusammengefasst.

Alle Ausführungsformen

Vorzugsweise beträgt der Indexunterschied zwischen dem Wellenleiterkern 12; 22; 32a, 32b und dem elektro-optischen Umgebungsmaterial 15a; 25a; 35a mindestens 0,5.

Vorzugsweise weist das Material des Wellenleiterkerns keine technisch nutzbaren elektro-optischen Eigenschaften auf.

Vorzugsweise ist die Anordnung aus dem Wellenleiterkern, dem Umgebungsmaterial, den optisch transparenten elektrischen Leitungsbereichen und den Leiterbahnen auf einem Substrat 11; 21; 31 aus nicht-elektro-optischem Material aufgebracht.

Vorzugsweise ist die Anordnung aus dem Wellenleiterkern, dem Umgebungsmaterial, den optisch transparenten elektrischen Leitungsbereichen und den Leiterbahnen auf einem Halbleiter-Substrat 11; 21; 31 aufgebracht.

Vorzugsweise ist ein Teil des Umgebungsmaterials zwischen dem Wellenleiterkern und dem Substrat angeordnet.

Vorzugsweise sind auf demselben Substrat 11, 21, 31 zusätzlich elektrische oder elektronische Komponenten integriert.

Vorzugsweise umfasst der Wellenleiterkern eine oder mehrere optische Fasern, welche in dem Umgebungsmaterial eingebettet sind.

Vorzugsweise beträgt die Länge der optisch transparenten elektrischen Leitungsbereiche 14a, 14b; 24a, 24b; 34a, 34b entlang der Ausbreitungsrichtung des Lichts mindestens 10 $\mu$m.

Vorzugsweise wird die Änderung der optischen Eigenschaften des elektrooptischen Materials 15a; 25a, 35a ganz oder teilweise durch einen Stromfluss bewirkt, der mit der angelegten Spannung (U) einhergeht.

Vorzugsweise propagiert mindestens 40% der geführten optischen Leistung in dem niedrigbrechenden Material 15a, 15b; 25a, 25b; 35a, 35b.

Vorzugsweise ist das niedrigbrechende elektro-optische Material 15a; 25a; 35a eine Kohlenstoffverbindung, insbesondere ein elektro-optisches Polymer.

Vorzugsweise umfassen die optisch transparenten elektrischen Leitungsbereiche 14a, 14b; 24a, 24b; 34a, 34b dotiertes Halbleitermaterial.

Vorzugsweise handelt es sich bei dem Halbleitermaterial des Wellerleiterkerns und/oder der optisch transparenten elektrischen Leitungsbereiche um Silizium.

Vorzugsweise liegt die Dotierungsdichte im Bereich von $5 \times 10^{15}$ bis $5 \times 10^{18}$ Fremdatome pro Kubikzentimeter.

Vorzugsweise umfassen die optisch transparenten elektrischen Leitungsbereiche 14a, 14b; 24a, 24b; 34a, 34b dotiertes oder undotiertes Metalloxid.

Vorzugsweise umfassen die optisch transparenten elektrischen Leitungsbereiche 14a, 14b; 24a, 24b; 34a, 34b ein leitfähiges Polymer.

Vorzugsweise enthält das Substrat 11; 21; 31 Silizium.

Vorzugsweise ist die 3dB-Grenzfrequenz der elektrooptischen Modulation größer als 2 GHz.

Vorzugsweise ist der Wellenleiterabschnitt, auf dem die elektro-optische Wechselwirkung erfolgt, kürzer als 250µm.

Vorzugsweise ist die Gruppengeschwindigkeit des Lichtes auf dem Wellenleiterabschnitt, auf dem die elektro-optische Wechselwirkung erfolgt, kleiner oder gleich 10% der Vakuumlichtgeschwindigkeit.

Vorzugsweise beträgt die Phasenverschiebung $\Delta\Phi$ bezogen auf die von außen angelegte Spannung $U$ und die Länge $L$ des Wellenleiterabschnitts, auf dem die elektro-optische Wechselwirkung erfolgt, mindestens $\Delta\Phi/(L\times U)=1000(Vm)^{-1}$.

Beispiel (A), das das Verständnis der Erfindung erleichtert

Bei dem Beispiel (A) erstrecken sich die optisch transparenten Elektroden 14a, 14b vorzugsweise entlang der Ausbreitungsrichtung des Lichts auf einer Länge, welche so groß ist, dass die Wechselwirkungszeitdauer zwischen dem elektrischen Feld und dem optischen Modenfeld innerhalb dieser Länge mindestens 0,1 ps beträgt.

Ausführungsform (B)

Entsprechend erstrecken sich bei der Ausführungsform (B) der Zuleitungsbereich 24a und die zweite Elektrode 26b entlang der Ausbreitungsrichtung des Lichts vorzugsweise auf einer Länge, welche so groß ist, dass die Wechselwirkungszeitdauer zwischen dem elektrischen Feld und dem optischen Modenfeld innerhalb dieser Länge mindestens 0,1 ps beträgt.

Ferner weist die optisch transparente und elektrisch leitfähige Schicht 24a vorzugsweise eine im Vergleich zum Wellenleiterkern 22 verringerte Höhe und/oder einen verminderten Brechungsindex auf, um ein Abstrahlen von optischer Leistung zu verhindern.

Vorzugsweise wird die niederohmige Verbindung zwischen dem Wellenleiterkern 22 und der Leiterbahn 23a durch eine Struktur 24a mit photonischer Bandlücke gebildet, um ein Abstrahlen von optischer Leistung zu verhindern.

Weiter wird die niederohmige Verbindung 24a zwischen dem Wellenleiterkern 22 und der Leiterbahn 23a vorzugsweise durch in Ausbreitungsrichtung fortlaufend wiederholte Querstege gebildet.

Ausführungsform (C)

Bei der Ausführungsform (C) weisen die Leiterschichten 34a, 34b vorzugsweise eine im Vergleich zum Wellenleiterkern verringerte Höhe und/oder einen verminderten Brechungsindex auf, um ein Abstrahlen von optischer Leistung zu verhindern.

Ferner vorzugsweise wird die niederohmige Verbindung zwischen den Wellenleiterkern-Streifen 32a, 32b und den Leiterbahnen 33a, 33b durch Strukturen 34a, 34b mit photonischer Bandlücke gebildet, um ein Abstrahlen von optischer Leistung zu verhindern.

Weiter wird die niederohmige Verbindung 34a, 34b zwischen den Wellenleiterkern-Streifen 32a, 32b und den Leiterbahnen 33a, 33b vorzugsweise durch in Ausbreitungsrichtung fortlaufend wiederholte Querstege gebildet.

Gegenstand der Erfindung ist also ein wellenleiterbasiertes elektro-optisches Bauelement, das zusammen mit elektronischen Komponenten auf einem gemeinsamen Halbleitersubstrat (z.B. Silizium) integriert werden kann. Es weist eine hohe elektrische Bandbreite auf und kann mit kleinen Spannungen betrieben werden. Ein solches Hochindexkontrast-Wellenleiter-Bauelement ist eine Schlüsselkomponente beim Zusammenführen von elektronischer (CMOS-basierter) Informationsverarbeitung und optischer Informationsübertragung.

**Patentansprüche**

1. Hochindexkontrast-Wellenleiter-Bauelement, umfassend:

- einen ein- oder mehrteiligen hochbrechenden Wellenleiterkern (22) aus einem elektrisch leitfähigen Material, so dass der Wellenleiterkern (22) eine erste Elektrode bildet, welche elektrisch mit zumindest einem optisch transparenten elektrischen Zuleitungsbereich (24a) verbunden ist,

- niedrigbrechendes Material (25a, 25b), welches den Wellenleiterkern (22) bzw. dessen Bestandteile umgibt, mit dem geführten Licht in Wechselwirkung steht und welches zumindest bereichsweise (25a) elektro-optische Eigenschaften aufweist, wobei der Indexunterschied zwischen dem Wellenleiterkern und dem elektro-optischen Umgebungsmaterial mindestens 0,4 beträgt,

- eine zweite in der Nähe des Wellenleiterkerns (22) verlaufende, ganz oder teilweise optisch transparente Elektrode (24b), wobei der Raum zwischen dem Wellenleiterkern (22) und der zweiten Elektrode (24b) zumindest bereichsweise mit dem elektro-optischen Material (25a) ausgefüllt ist, so dass durch Anlegen einer Spannung (U) zwischen dem Wellenleiterkern (22) und der zweiten Elektrode (24b) ein elektrisches Feld in dem elektro-optischen Umgebungsmaterial (25a) zwischen dem Wellenleiterkern (22) und der zweiten Elektrode (24b) erzeugt und damit eine Änderung der optischen Eigenschaften des elektro-optischen Umgebungsmaterials (25a) bewirkt wird.

2. Hochindexkontrast-Wellenleiter-Bauelement nach Anspruch 1, ferner umfassend:

eine erste in der Nähe des Wellenleiters (22) verlaufende Leiterbahn (23a) mit hoher Leitfähigkeit, wobei der die erste Elektrode (24a) bildende Wellenleiterkern (22) entlang der Ausbreitungsrichtung niederohmig mit der Leiterbahn (23a) verbunden ist, derart dass die Änderung des zwischen der zweiten Elektrode (24b) und dem Kern (22) herrschenden elektrischen Feldes schnell erfolgen kann.

3. Hochindexkontrast-Wellenleiter-Bauelement nach Anspruch 2, **dadurch gekennzeichnet, dass** die niederohmige Verbindung zwischen dem Wellenleiterkern (22) und der Leiterbahn (23a) durch eine flächig ausgedehnte, geschlossene oder strukturierte, optisch transparente und elektrisch leitfähige Schicht (24a) gebildet wird.

4. Hochindexkontrast-Wellenleiter-Bauelement nach einem der vorstehenden Ansprüche **dadurch gekennzeichnet, dass** die zweite Elektrode (24b) durch eine flächig ausgedehnte, geschlossene oder in Ausbreitungsrichtung strukturierte, optisch transparente und elektrisch leitfähige Schicht (24b) gebildet wird und niederohmig mit mindestens einer zweiten in der Nähe des Wellenleiters verlaufenden Leiterbahn (23b) hoher Leitfähigkeit verbunden ist.

5. Hochindexkontrast-Wellenleiter-Bauelement, umfassend:

- einen hochbrechenden mehrteiligen Wellenleiterkern, der zumindest einen ersten und zweiten elektrisch leitfähigen Wellenleiter-Streifen (32a, 32b) aufweist, wobei die Streifen parallel und elektrisch voneinander isoliert sind, so dass die Streifen (32a, 32b) eine erste bzw. zweite Elektrode bilden,
- niedrigbrechendes Material (35a, 35b), das die Streifen (32a, 32b) umgibt, mit dem geführten Licht in Wechselwirkung steht und welches zumindest bereichsweise (35a) elektro-optische Eigenschaften aufweist, wobei der Raum zwischen den Streifen (32a, 32b) ganz oder teilweise von dem elektro-optischen Material (35a) ausgefüllt ist, wobei der Indexunterschied zwischen dem Wellenleiterkern und dem elektro-optischen Umgebungsmaterial mindestens 0,4 beträgt,
- einen ersten und zweiten ganz oder teilweise optisch transparenten Zuleitungsbereich (34a, 34b), welcher den ersten bzw. zweiten Streifen (32a, 32b) elektrisch kontaktiert, um diese mit einer Spannung (U) zu beaufschlagen, so dass durch Anlegen der Spannung (U) zwischen den Streifen (32a, 32b) ein elektrisches Feld in dem elektro-optischen Umgebungsmaterial (35a) zwischen den Streifen (32a, 32b) erzeugt und damit eine Änderung der optischen Eigenschaften dieses Materials bewirkt wird,

wobei die Zuleitungsbereiche (34a, 34b) entlang der Ausbreitungsrichtung des Lichts auf einer Länge mit dem zugehörigen Streifen (32a, 32b) elektrisch verbunden sind, wobei die Länge so groß ist, dass die Wechselwirkungszeitdauer zwischen dem elektrischen Feld und dem optischen Modenfeld innerhalb dieser Länge mindestens 0,1 ps beträgt.

6. Hochindexkontrast-Wellenleiter-Bauelement nach Anspruch 5, ferner umfassend:

eine erste und zweite in der Nähe des Wellenleiterkerns verlaufende Leiterbahn (33a, 33b) hoher Leitfähigkeit, wobei der erste und zweite Wellenleiterkern-Streifen niederohmig mit der ersten bzw. zweiten Leiterbahn (33a, 33b) verbunden ist, derart dass die Änderung elektrischen Feldes schnell erfolgen kann.

7. Hochindexkontrast-Wellenleiter-Bauelement nach Anspruch 6, **dadurch gekennzeichnet, dass** die niederohmige Verbindung zwischen den Wellenleiterkern-Streifen (32a, 32b) und den Leiterbahnen (33a, 33b) durch flächig ausgedehnte, geschlossene oder strukturierte optisch transparente Leiterschichten (34a, 34b) gebildet wird.

8. Hochindexkontrast-Wellenleiter-Bauelement nach einem der vorstehenden Ansprüche, **dadurch gekennzeichnet,**

**dass** der genutzte optische Modus eine dominante Komponente des elektrischen Feldes aufweist, die die Grenzflächen zwischen dem hochbrechenden Wellenleiterkern (12; 22; 32a, 32b) und dem niedrigbrechenden elektrooptischen Umgebungsmaterial (15a; 25a; 35a) überwiegend senkrecht durchdringt, und
**dass** die unstetige Überhöhung der Normalkomponente des zum optischen Modus gehörenden elektrischen Feldes an dieser Grenzfläche dazu genutzt wird, die Interaktion des geführten Lichtes mit dem elektro-optischen Material zu verstärken.

9. Hochindexkontrast-Wellenleiter-Bauelement nach einem der vorstehenden Ansprüche, **dadurch gekennzeichnet, dass** der Wellenleiterkern (12; 22; 32a, 32b) aus einem dotierten oder undotierten Halbleitermaterial besteht.

10. Hochindexkontrast-Wellenleiter-Bauelement nach einem der vorstehenden Ansprüche, **dadurch gekennzeichnet, dass** der Wellenleiterkern (12; 22; 32a, 32b) und/oder mindestens einer der ihn umgebenden Bereiche (14a, 14b, 15a, 15b; 24a, 24b, 25a, 25b; 34a, 34b, 35a, 35b) entlang der Ausbreitungsrichtung des Lichtes Strukturierungen aufweisen, die die Dispersionsrelation des optischen Modus in besonderer Weise beeinflussen, insbesondere mittels in Ausbreitungsrichtung regelmäßiger Strukturierungen, die die Gruppengeschwindigkeit des geführten Lichtes herabsetzen oder eine Dispersionskompensation bewirken.

11. Hochindexkontrast-Wellenleiter-Bauelement nach einem der vorstehenden Ansprüche, **dadurch gekennzeichnet, dass** die Gruppengeschwindigkeiten des elektrischen Signals und des optischen Signals auf dem Wellenleiterabschnitt, auf dem die elektrooptische Wechselwirkung erfolgt, gleich sind oder nur geringfügig voneinander abweichen.

12. Hochindexkontrast-Wellenleiter-Bauelement nach einem der vorstehenden Ansprüche, **dadurch gekennzeichnet, dass** der Wellenleiterkern aus dotiertem oder undotiertem Silizium besteht.

13. Dispersionskompensator mit einem Hochindexkontrast-Wellenleiter-Bauelement nach einem der vorstehenden Ansprüche.

14. Phasen- bzw. Frequenzmodulator mit einem Hochindexkontrast-Wellenleiter-Bauelement nach einem der vorstehenden Ansprüche.

15. Amplitudenmodulator mit einem Hochindexkontrast-Wellenleiter-Bauelement nach einem der vorstehenden Ansprüche.

16. Mach-Zehnder-Interferometer mit einem Hochindexkontrast-Wellenleiter-Bauelement nach einem der vorstehenden Ansprüche in zumindest einem Arm.

**Claims**

1. A high-index contrast waveguide component comprising:

   - an one-piece or multi-part high-refractive waveguide core (22) made of an electrically conductive material so that the waveguide core (22) forms a first electrode being electrically connected with at least one optically transparent electric supply line area (24a),
   - low-refractive material (25a, 25b) surrounding the waveguide core (22) or its parts respectively, being in interaction with the guided light, and having electro-optical properties in at least some of its regions (25a), wherein the index difference between the waveguide core and the electro-optical surrounding material is at least 0.4,
   - a completely or partially optically transparent second electrode (24b) extending closely to the waveguide core (22), wherein the space between the waveguide core (22) and the second electrode (24b) in at least some of its regions is filled with the electro-optical material (25a) so that, by applying a voltage (U), an electric field is generated in the electro-optical surrounding material (25a) between the waveguide core (22) and the second electrode (24b), and the optical properties of the electro-optical surrounding material (25a) are modified thereby.

2. The high-index contrast waveguide component according to claim 1, further comprising:

   a first conductor path (23a) of high conductivity, extending closely to the waveguide core (22), wherein the waveguide core (22) forming the first electrode (24a) is connected with the conductor path (23a) at low resistance along the propagation direction such that the electric field existing between the electrode (24b) and the core (22) is modified fastly.

3. The high-index contrast waveguide component according to claim 2, **characterized in that** the low-ohmic connection between the waveguide core (22) and the conductor path (23a) is formed by an optically transparent and electrically conductive layer (24a) that is planar or laminarily extended, and closed or structured.

4. The high-index contrast waveguide component according to one of the preceding claims, **characterized in that** the second electrode (24a) is provided with an optically transparent and electrically conductive layer (24b) that is planar or laminarily extended, and closed or structured in propagation direction, and is connected at low resistance with at least a second conductor path (23b) of high conductivity, extending closely to the waveguide core.

5. A high-index contrast waveguide component comprising:

- a high-refractive, multi-part waveguide core having at least a first and a second electrically conductive waveguide core stripes (32a, 32b), wherein the stripes are parallel and electrically insulated from each other so that the stripes (32a, 32b) form a first and a second electrode respectively,
- low-refractive material (35a, 35b) surrounding the stripes (32a, 32b), being in interaction with the guided light, and having electro-optical properties in at least some regions (35a) thereof, wherein the space between the stripes (32a, 32b) is completely or partially filled with the electro-optical material (35a), wherein the index difference between the waveguide core and the electro-optical surrounding material is at least 0.4,
- a first and a second, completely or partially optically transparent supply line area (34a, 34b) being in electric contact with the first and the second stripe (32a, 32b) for applying a voltage (U) thereto so that, by applying the voltage (U) between the stripes (32a, 32b), an electric field is generated in the electro-optical surrounding material (35a) between the stripes (32a, 32b) and the optical properties of this material are modified hereby,

wherein the supply line areas (34a, 34b) are electrically connected with the corresponding stripes (32a, 32b) along the propagation direction of the light over a length being so long that the time period of interaction between the electric field and the optical mode field within this length is at least 0.1.ps.

6. The high-index contrast waveguide component according to claim 5, further comprising:

a first and a second conductor path (33a, 33b) of high conductivity, extending closely to the waveguide core, wherein the first and the second waveguide core stripes are connected at low resistance with the first and the second conductor paths (33a, 33b) such that the electric field is modified fastly.

7. The high-index contrast waveguide component according to claim 6, **characterized in that** the low-ohmic connection between the waveguide core stripes (32a, 32b) and the conductor paths (33a, 33b) is provided by optically transparent conductor layers (34a, 34b) that are planar or laminarily extended and closed or structured.

8. The high-index contrast waveguide component according to one of the preceding claims, **characterized in that** the used optical mode has a dominant component of the electric field that component permeates boundary layers between the high-refractive waveguide core (12; 22; 32a, 32b) and the low-refractive electro-optical surrounding material (15a; 25a; 35a) predominantly in perpendicular direction, and the discontinuous super elevation of the normal component of the electric field belonging the optical mode is used at this boundary layer to amplify the interaction of the guided light with the electro-optical material.

9. The high-index contrast waveguide component according to one of the preceding claims, **characterized in that** the waveguide core (12; 22; 32a, 32b) consists of a doped or un-doped semiconductor material.

10. The high-index contrast waveguide component according to one of the preceding claims, **characterized in that** the waveguide core (12; 22; 32a, 32b) and/or at least one of the areas (14a, 14b, 15a, 15b; 24a, 24b, 25a, 25b; 34a, 34b, 35a, 35b) surrounding the waveguide core have structurings along the propagation direction of the light, which structurings influence the dispersion relation of the optical mode in a special manner, particularly by means of structurings being regular along the propagation direction, which structurings lower the group velocity of the guided light, or cause a dispersion compensation.

**11.** The high-index contrast waveguide component according to one of the preceding claims, **characterized in that** on the waveguide section, on which the electro-optical interaction takes place, the group velocities of the electric signal and of the optical signal are equal or deviate only slightly from each other.

**12.** The high-index contrast waveguide component according to one of the preceding claims, **characterized in that** the waveguide core consists of doped or un-doped silicon.

**13.** A dispersion compensator with a high-index contrast waveguide component according to one of the preceding claims.

**14.** A phase or frequency modulator respectively with a high-index contrast waveguide component according to one of the preceding claims.

**15.** An amplitude modulator with a high-index contrast waveguide component according to one of the preceding claims.

**16.** A Mach Zehnder Interferometer with a high-index contrast waveguide component according to one of the preceding claims, in at least one arm.

**Revendications**

**1.** Composant de guide d'ondes à contraste d'indice élevé, comprenant :

- un noyau de guide d'ondes à haute réfraction en une ou plusieurs parties (22) en matériau électriquement conducteur, de sorte que le noyau de guide d'ondes (22) forme une première électrode qui est reliée électriquement à au moins une région d'alimentation électrique optiquement transparente (24a),
- un matériau à basse réfraction (25a, 25b) qui entoure le noyau de guide d'ondes (22), respectivement ses éléments constitutifs, est en interaction avec la lumière guidée et qui présente au moins par endroits (25a) des propriétés électro-optiques, la différence d'indice entre le noyau de guide d'ondes et le matériau d'entourage électro-optique étant d'au moins 0,4,
- une seconde électrode entièrement ou partiellement optiquement transparente (24b) qui s'étend à proximité du noyau de guide d'ondes (22), l'espace entre le noyau de guide d'ondes (22) et la seconde électrode (24b) étant comblé au moins par endroits par le matériau électro-optique (25a), de sorte que, lors de l'application d'une tension (*U*) entre le noyau de guide d'ondes (22) et la seconde électrode (24b), un champ électrique est produit dans le matériau d'entourage électro-optique (25a) entre le noyau de guide d'ondes (22) et la seconde électrode (24b) et donc une modification des propriétés optiques du matériau d'entourage électro-optique (25a) est obtenue.

**2.** Composant de guide d'ondes à contraste d'indice élevé selon la revendication 1, comprenant en outre :

une première piste conductrice (23a) à haute conductibilité s'étendant à proximité du guide d'ondes (22), le noyau de guide d'ondes (22) qui forme la première électrode (24a) étant relié à basse impédance à la piste conductrice (23a) suivant la direction de propagation, de sorte que la variation du champ électrique régnant entre la seconde électrode (24b) et le noyau (22) peut s'effectuer rapidement.

**3.** Composant de guide d'ondes à contraste d'indice élevé selon la revendication 2, **caractérisé en ce que**, la liaison à basse impédance entre le noyau de guide d'ondes (22) et la piste conductrice (23a) est formée par une couche optiquement transparente et électroconductrice (24a) étendue à plat, fermée ou structurée.

**4.** Composant de guide d'ondes à contraste d'indice élevé selon une des revendications précédentes, **caractérisé en ce que** la seconde électrode (24b) est formée par une couche optiquement transparente et électroconductrice (24b) étendue à plat, fermée ou structurée dans la direction de propagation et est reliée à basse impédance avec au moins une seconde piste conductrice (23b) à haute conductibilité s'étendant à proximité du guide d'ondes.

**5.** Composant de guide d'ondes à contraste d'indice élevé comprenant :

- un noyau de guide d'ondes noyau à haute réfraction en plusieurs parties qui comporte au moins une première et une seconde bande de guide d'ondes électroconductrices (32a, 32b), les bandes étant isolées l'une de l'autre parallèlement et électriquement, de sorte que les bandes (32a, 32b) forment une première, respectivement une seconde électrode,
- un matériau à basse réfraction (35a, 35b) qui entoure les bandes (32a, 32b), est en interaction avec la lumière guidée et qui présente au moins par endroits (35a) des propriétés électro-optiques, l'espace entre les bandes (32a, 32b) étant comblé entièrement ou partiellement par le matériau électro-optique (35a), la différence d'indice entre le noyau de guide d'ondes et le matériau d'entourage électro-optique étant d'au moins 0,4,
- une première et une seconde région d'alimentation entièrement ou partiellement optiquement transparentes (34a, 34b) qui sont en contact avec la première, respectivement la seconde bande (32a, 32b) pour soumettre celles-ci à une tension (U), de sorte qu'en appliquant la tension (U) entre les bandes (32a, 32b) un champ électrique est produit dans le matériau d'entourage électro-optique (35a) entre les bandes (32a, 32b) et donc une modification des propriétés optiques de ce matériau est obtenue.

les régions d'alimentation (34a, 34b) étant reliées électriquement sur une longueur aux bandes correspondantes (32a, 32b) suivant la direction de propagation de la lumière, la longueur étant telle que la durée d'interaction entre le champ électrique et le champ de mode optique à l'intérieur de cette longueur est d'au moins 0,1 ps.

6. Composant de guide d'ondes à contraste d'indice élevé selon la revendication 5, comprenant en outre :

une première et une seconde piste conductrice (33a, 33b) à haute conductibilité s'étendant à proximité du noyau de guide d'ondes, la première et la seconde bande de guide d'ondes étant reliées à basse impédance à la première, respectivement à la seconde piste conductrice (33a, 33b), de sorte que la variation du champ électrique peut s'effectuer rapidement.

7. Composant de guide d'ondes à contraste d'indice élevé selon la revendication 6, **caractérisé en ce que** la liaison à basse impédance entre les bandes de guide d'ondes (32a, 32b) et les pistes conductrices (33a, 33b) est formée par des couches conductrices optiquement transparentes (34a, 34b) étendues à plat, fermées ou structurées.

8. Composant de guide d'ondes à contraste d'indice élevé selon une des revendications précédentes, **caractérisé en ce que** le mode optique utilisé présente une composante dominante du champ électrique qui traverse majoritairement verticalement les interfaces entre le noyau de guide d'ondes à haute réfraction (12 ; 22 ; 32a, 32b) et le matériau d'entourage électro-optique à basse réfraction (15a ; 25a ; 35a), et **en ce que** la surélévation discontinue de la composante normale du champ électrique appartenant au mode optique au niveau de cette interface est utilisée pour renforcer l'interaction de la lumière guidée avec le matériau électro-optique.

9. Composant de guide d'ondes à contraste d'indice élevé selon une des revendications précédentes, **caractérisé en ce que** le noyau de guide d'ondes (12 ; 22 ; 32a, 32b) est constitué de matériau semi-conducteur dopé ou non dopé.

10. Composant de guide d'ondes à contraste d'indice élevé selon une des revendications précédentes, **caractérisé en ce que** le noyau de guide d'ondes (12 ; 22 ; 32a, 32b) et/ou au moins une des régions l'entourant (14a, 14b, 15a, 15b ; 24a, 24b, 25a, 25b ; 34a, 34b, 35a, 35b) comportent, suivant la direction de propagation de la lumière, des structurations qui influencent de manière particulière la relation de dispersion du mode optique, en particulier au moyen de structurations régulières dans la direction de propagation, lesquelles abaissent la vitesse de groupe de la lumière guidée ou provoquent une compensation de dispersion.

11. Composant de guide d'ondes à contraste d'indice élevé selon une des revendications précédentes, **caractérisé en ce que** les vitesses de groupe du signal électrique et du signal optique sur la portion de guide d'ondes sur laquelle s'effectue l'interaction électro-optique sont égales ou seulement légèrement différentes l'une de l'autre.

12. Composant de guide d'ondes à contraste d'indice élevé selon une des revendications précédentes, **caractérisé en ce que** le noyau de guide d'ondes est constitué de silicium dopé ou non dopé.

13. Compensateur de dispersion comprenant un composant de guide d'ondes à contraste d'indice élevé selon une des revendications précédentes.

**14.** Modulateur de phase, respectivement de fréquence comprenant un composant de guide d'ondes à contraste d'indice élevé selon une des revendications précédentes.

**15.** Modulateur d'amplitude comprenant un composant de guide d'ondes à contraste d'indice élevé selon une des revendications précédentes.

**16.** Interféromètre de Mach-Zehnder comprenant un composant de guide d'ondes à contraste d'indice élevé selon une des revendications précédentes dans au moins un bras.

## Fig. 1

## Fig. 2

# Fig. 3

a)

b)

# Fig. 4

a)

b)

c)

# Fig. 5

a)

b)

c)

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030053730 A
- US 20050175270 A
- US 20040208454 A
- US 20050089257 A
- US 6993212 B2
- US 20050179986 A1
- US 20050054199 A1
- US 20030174982 A1
- US 20060056768 A1

**In der Beschreibung aufgeführte Nicht-Patentliteratur**

- **LIU et al.** A high-speed silicon optical modulator based on a metal-oxide-semiconductor capacitor. *Nature,* 2004, vol. 427, 615 ff
- **VON ALMEIDA et al.** Guiding and Confining light in void nanostructure. *Opt. Lett.,* 2004, vol. 29 (11), 1211ff
- **BAEHR-JONES et al.** Optical modulation and detection in slotted Silicon waveguides. *Opt. Express,* 2005, vol. 13 (14), 5216 ff
- **RYLEY et al.** Organic-on-Inorganic Guided Wave Modulator. *Microwave and optical technology letters,* 1990, vol. 3
- **GERRIT SCHOER et al.** TiO2-Waveguide with ZnO-ZnO :Al cladding for active optical subsystems. *Proceedings of SPIE,* 2003, vol. 4998